# EUROPEAN PATENT APPLICATION

(11) **EP 4 138 377 A1**
(43) Date of publication of application: **22.02.2023**
(21) Application number: 21807572.9
(22) Date of filing: 11.05.2021
(51) Int. Cl.: H04M 1/725

(54) **FAMILY SCHEDULE FUSION METHOD AND APPARATUS**

(30) Priority: 18.05.2020 CN 202010420165
(71) Applicant: Huawei Technologies Co., Ltd., Shenzhen, Guangdong 518129 (CN)
(72) Inventor: ZHANG, Jing, Shenzhen, Guangdong 518129 (CN); LIU, Lin, Shenzhen, Guangdong 518129 (CN)
(74) Representative: Pfenning, Meinig & Partner mbB
(86) International application number: PCT/CN2021/092960
(87) International publication number: WO 2021/233161

(57) **Abstract**

An event information processing method and a first electronic device for implementing the method are provided, and relate to the field of communication technologies. The method includes: A first electronic device receives a first message sent by a second electronic device. The first message carries a trust level of the second electronic device. The first electronic device determines whether the trust level of the second electronic device meets a preset condition. When the trust level of the second electronic device meets the preset condition, the first electronic device sends a first event to the second electronic device. According to the technical solution, selective event synchronization can be implemented.

## Description

This application claims priority to Chinese Patent Application No. 202010420165.X, filed with the China National Intellectual Property Administration on May 18, 2020 and entitled "FAMILY EVENT COMBINATION METHOD AND APPARATUS", which is incorporated herein by reference in its entirety.

### TECHNICAL FIELD

This application relates to the field of communication technologies, and in particular, to a family event combination method and an apparatus.

### BACKGROUND

With development of the times and social progress, time is becoming increasingly important to people. People also hope to manage their events more conveniently and plan their time properly. Currently, home devices are gradually becoming an important part of electronic products. With popularization of these electronic products, it has become a trend to manage an event on an intelligent terminal by using a calendar function. However, there are still some limitations to event synchronization and combination between a plurality of devices (including but not limited to event synchronization and combination between mobile phones, between a mobile phone and a home device, and the like) currently.

Currently, to synchronize an event, after a user logs in to an account, a server transmits the event, for example, the server synchronizes a calendar event to products such as a speaker or a TV. This solution relies on a server and a user account, and the user needs to have an Internet account, resulting in lack of universality and poor user experience. In addition, in this solution, not all intelligent terminal devices in a home can be covered. Although events under all accounts may be bound, these events cannot be combined based on the events themselves because the events are under the accounts. As a result, a large quantity of repetitive events appear in the home device. In addition, current event synchronization lacks flexibility, and this is mainly reflected in the following three aspects.
(1) Currently, all events under an account are only synchronized, but an event cannot be selected. For example, some events are conference notifications at work, and are not suitable to be synchronized to all family member devices. However, effective selection cannot be made currently.
(2) Only an entire event can be synchronized, but a part of content of the event cannot be selected for synchronization. For example, for many events, only some important information of the events needs to be known (that is, only index information needs to be synchronized). Other information is synchronized only when the user taps to view detailed information. However, a current synchronization mechanism synchronizes the entire event.
(3) The synchronization mechanism relies on the server, and relies on a specific server service. For an event that is not established on a specific network service, for example, a local event, synchronization between a plurality of devices cannot be performed.

### SUMMARY

Embodiments of the present invention provide a family event combination method and an apparatus, to implement synchronization of a calendar event between all intelligent terminals such as a mobile phone, a TV, a speaker, and another home product without being limited by a server, and flexibly perform distributed synchronization.

According to a first aspect, an embodiment of the present invention provides an event information processing method, applied to a first electronic device. The event information processing method includes:

The first electronic device receives a first message sent by a second electronic device. The first message carries a trust level of the second electronic device.

The first electronic device determines whether the trust level of the second electronic device meets a preset condition.

When the trust level of the second electronic device meets the preset condition, the first electronic device sends a first event to the second electronic device.

According to the technical solution, selective event synchronization can be implemented. For an event that is not suitable to be synchronized to all family member devices, such as a conference notification at work, a user may set a trust level of an event that is allowed to be synchronized, and select to send the event to only an electronic device whose trust level meets the preset condition.

In a possible implementation, that the first electronic device determines whether the trust level of the second electronic device meets a preset condition, and when the trust level of the second electronic device meets the preset condition, the first electronic device sends a first event to the second electronic device includes:

The first electronic device determines whether the trust level of the second electronic device is lower than an allowed device trust level corresponding to the first event.

When the trust level of the second electronic device is not lower than the allowed device trust level corresponding to the first event, the first electronic device sends the first event to the second electronic device.

According to the technical solution, the event can be sent to only an electronic device whose trust level is not lower than the allowed device trust level corresponding to the event, so that the user can flexibly select a home device to which the event is synchronized.

In a possible implementation, the method further includes:

When the trust level of the second electronic device is lower than the allowed device trust level corresponding to the first event, the first electronic device determines whether the second electronic device is in a device trustlist corresponding to the first event.

When the second electronic device is in the device trustlist, the first electronic device sends the first event to the second electronic device.

According to the technical solution, for some second electronic devices in the device trustlist, the first electronic device may select to synchronize the first event to these second electronic devices without a need to meet the allowed device trust level. In this way, event synchronization management can be conveniently implemented for a home public device whose trust level is relatively low.

In a possible implementation, the allowed device trust level and the device trustlist are set by the first electronic device.

According to the technical solution, the allowed device trust level and the device trustlist can be flexibly set, to implement selective event synchronization.

In a possible implementation, the method further includes:

The first electronic device receives a second event sent by the second electronic device.

The first electronic device determines whether the first electronic device has a third event approximate to the second event.

When the third event is approximate to the second event, the first electronic device combines the third event and the second event to generate a fourth event.

The first electronic device stores the fourth event, and deletes the third event and the second event.

The first electronic device sends the fourth event to the second electronic device.

According to the technical solution, events can be combined based on the events themselves. This avoids a large quantity of repetitive events.

In a possible implementation, that the first electronic device determines whether the first electronic device has a third event approximate to the second event includes:
determining whether a similarity between a title text of the third event and a title text of the second event is greater than a first threshold;
when the similarity between the title text of the third event and the title text of the second event is greater than the first threshold, determining whether a time difference between the third event and the second event is less than a second threshold; and
when the time difference between the third event and the second event is less than the second threshold, determining that the third event is approximate to the second event.

According to the technical solution, whether two events are approximate can be quickly determined in a case in which titles of the two events have a high similarity and a small time difference.

In a possible implementation, the determining whether a similarity between a title text of the third event and a title text of the second event is greater than a first threshold includes:
when the similarity between the title text of the third event and the title text of the second event is less than or equal to the first threshold, replacing the title text of the third event, and determining whether a similarity between a title text of the third event and the title text of the second event is greater than the first threshold.

According to the technical solution, after a title text of an event is replaced, whether title texts of events are approximate can be determined again, so that accuracy of determining approximate events is improved.

In a possible implementation, after the determining whether a time difference between the third event and the second event is less than a second threshold, the method further includes:
when the time difference between the third event and the second event is greater than or equal to the second threshold, determining whether a similarity between a location of the third event and a location of the second event is greater than a third threshold; and
when the similarity between the location of the third event and the location of the second event is greater than the third threshold, determining that the third event is approximate to the second event.

According to the technical solution, a similarity between locations of the events is better determined, and accuracy of determining the approximate events is improved.

In a possible implementation, the determining whether a similarity between a location of the third event and a location of the second event is greater than a third threshold includes:
when the similarity between the location of the third event and the location of the second event is less than or equal to the third threshold, after replacing a text description of the location of the third event, further determining whether a similarity between a location of the third event and the location of the second event is greater than the third threshold.

According to the technical solution, after the text description of the location of the event is replaced, a similarity between title texts of the events can be determined again, so that accuracy of determining approximate events is improved.

In a possible implementation, that the first electronic device combines the third event and the second event when the third event is approximate to the second event, to generate a fourth event includes:

The first electronic device displays first prompt information. The first prompt information is used to prompt whether to combine approximate events.

In response to an input operation for the first prompt information, the first electronic device combines the third event and the second event to generate the fourth event.

According to the technical solution, before the approximate events are combined, the user can be prompted. After it is determined that the approximate events are determined, the electronic device generates a combined event. This improves user experience for event synchronization.

In a possible implementation, the fourth event includes all information in the second event and the third event.

According to the technical solution, when events are combined, all information such as titles, locations, participants, and attachments in the approximate events is combined, so that mutual supplement between the events is implemented.

In a possible implementation, that the first electronic device sends the first event to the second electronic device includes:

The first electronic device sends index information of the first event to the second electronic device.

According to the technical solution, only the index information of the event is sent, so that storage space of an electronic device at a receive end can be reduced, and the event can be managed more flexibly.

In a possible implementation, when the first electronic device receives a request message sent by the second electronic device, the first electronic device sends all information in the first event to the second electronic device.

According to the technical solution, when the electronic device at a receive end sends a request, all information in the event is sent, so that storage space of the electronic device at the receive end can be reduced, and the event can be managed more flexibly.

According to another aspect, an embodiment of the present invention provides an electronic device, including one or more processors and a memory. The memory stores code. When the code is executed by the electronic device, the electronic device is enabled to perform the event information processing method according to any possible implementation of any one of the foregoing aspects.

According to another aspect, an embodiment of the present invention provides a computer storage medium, including a computer instruction. When the computer instruction is run on an electronic device, the electronic device is enabled to perform the event information processing method according to any possible implementation of any one of the foregoing aspects.

According to another aspect, an embodiment of the present invention provides a computer program product. When the computer program product is run on a computer, the computer is enabled to perform the event information processing method according to any possible implementation of any one of the foregoing aspects.

### BRIEF DESCRIPTION OF DRAWINGS

FIG. 1 is a schematic diagram of a hardware structure of an electronic device according to an embodiment of the present invention;
FIG. 2 is a block diagram of a software structure of an electronic device 100 according to an embodiment of the present invention;
FIG. 3A and FIG. 3B are schematic diagrams in which a new device is added to a home network according to an embodiment of the present invention;
FIG. 4A to FIG. 4C are schematic flowcharts of calendar event synchronization between devices according to an embodiment of the present invention;
FIG. 5A to FIG. 5D are schematic diagrams of a group of calendar event synchronization capability setting interfaces according to an embodiment of the present invention;
FIG. 6A to FIG. 6F are schematic diagrams of a group of interfaces according to an embodiment of the present invention;
FIG. 7A to FIG. 7C are schematic diagrams of another group of interfaces according to an embodiment of the present invention;
FIG. 8A is a schematic flowchart in which events are combined according to an embodiment of the present invention;
FIG. 8B is a schematic flowchart in which an approximate event is determined according to an embodiment of the present invention;
FIG. 9A to FIG. 9F are schematic diagrams of another group of interfaces according to an embodiment of the present invention;
FIG. 10A to FIG. 10F are schematic diagrams of another group of interfaces according to an embodiment of the present invention;
FIG. 11A to FIG. 11F are schematic diagrams of another group of interfaces according to an embodiment of the present invention;
FIG. 12 is an event synchronization flowchart of a device supporting distributed storage according to an embodiment of the present invention; and
FIG. 13 is a schematic diagram of another structure of an electronic device according to an embodiment of the present invention.

### DESCRIPTION OF EMBODIMENTS

The following describes the technical solutions in embodiments of the present invention with reference to the accompanying drawings in embodiments of the present invention. In description in embodiments of the present invention, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of the present invention, "a plurality of" means two or more.

The following terms "first" and "second" are merely intended for a purpose of description, and shall not be understood as an implication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

In embodiments of the present invention, a calendar event can be synchronized between all home devices such as a mobile phone, a TV, and a speaker without being limited by a server, and distributed synchronization can be flexibly performed to combine same events. The home device not only includes an electronic device such as a mobile phone or a wearable device that is usually used by a family member, but also includes an electronic device such as a TV, a speaker, or a game console that is usually used by family members. In addition, a calendar event synchronization method in embodiments of the present invention is not limited to an electronic device used in a home network. The calendar event synchronization method in embodiments of the present invention may be applied to electronic devices used in a working network, provided that the electronic devices are connected through a wireless local area network such as Wi-Fi, and communication means such as Bluetooth, NFC, Nearby, Thread, and ZigBee.

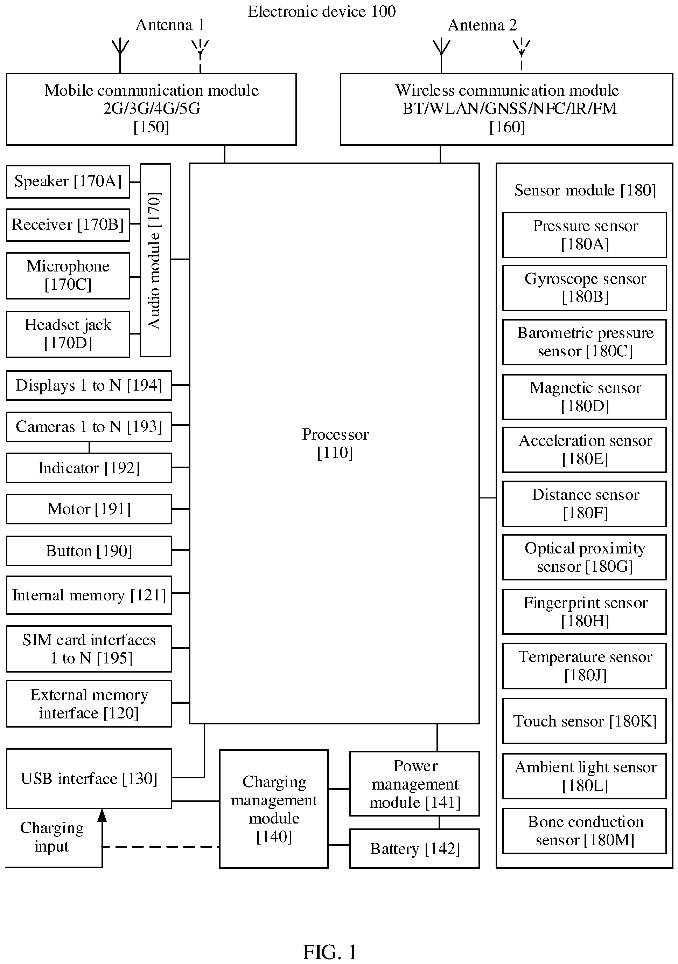

For example, FIG. 1 is a schematic diagram of a structure of an electronic device 100.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in this embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through a PCM bus. In some embodiments, the audio module 170 may also transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI may be configured to connect the processor 110 to a peripheral component such as the display 194 or the camera 193. The MIPI includes a camera serial interface (camera serial interface, CSI), a display serial interface (display serial interface, DSI), and the like. In some embodiments, the processor 110 communicates with the camera 193 via the CSI, to implement a photographing function of the electronic device 100. The processor 110 communicates with the display 194 via the DSI, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI, or the like.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to other electronic devices such as an AR device.

It may be understood that an interface connection relationship between the modules shown in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 may supply power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may be alternatively disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 and at least some modules of the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, a calendar event may be synchronized by using a plurality of communication networks, including but not limited to a cellular network implemented by the mobile communication module 150, a wireless local area network such as Wi-Fi, and communication means implemented by the wireless communication module 160, such as Bluetooth, NFC, Nearby, Thread, and ZigBee.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GNSS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP may be configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of an image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) processing unit. The NPU quickly processes input information by referring to a structure of a biological neural network, for example, a transfer mode between human brain neurons, and may further continuously perform self-learning. The NPU can implement applications such as intelligent cognition of the electronic device 100, for example, image recognition, facial recognition, speech recognition, and text understanding.

The external memory interface 120 may be configured to connect to an external storage card, for example, a micro-SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required for at least one function (for example, a sound playing function or an image playing function), and the like. The data storage area may store data (such as audio data and a phone book) and the like created when the electronic device 100 is used. In addition, the internal memory 121 may include a high-speed random access memory, and may further include a nonvolatile memory, for example, at least one magnetic disk storage device, a flash storage device, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement audio functions such as music playing and recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be configured to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines pressure intensity based on the change in the capacitance. When a touch operation is performed on the display 194, the electronic device 100 detects intensity of the touch operation by using the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 180B may be configured to determine a moving posture of the electronic device 100. In some embodiments, an angular velocity of the electronic device 100 around three axes (namely, axes x, y, and z) may be determined by using the gyro sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall effect sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature, for example, automatic unlocking upon opening of the flip cover is set based on a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance by using the distance sensor 180F to implement quick focusing.

The optical proximity sensor 180G may include, for example, a light-emitting diode (LED) and an optical detector, such as, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor near the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142 to avoid abnormal shutdown caused by a low temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. The display 194 may provide a visual output related to the touch operation. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. For touch operations performed on different areas of the display 194, the motor 191 may also correspond to different vibration feedback effects. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external memory card. The electronic device 100 interacts with a network by using the SIM card, to implement functions such as conversation and data communication. In some embodiments, the electronic device 100 uses the eSIM card, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In this embodiment of the present invention, an Android system of a layered architecture is used as an example to illustrate the software structure of the electronic device 100.

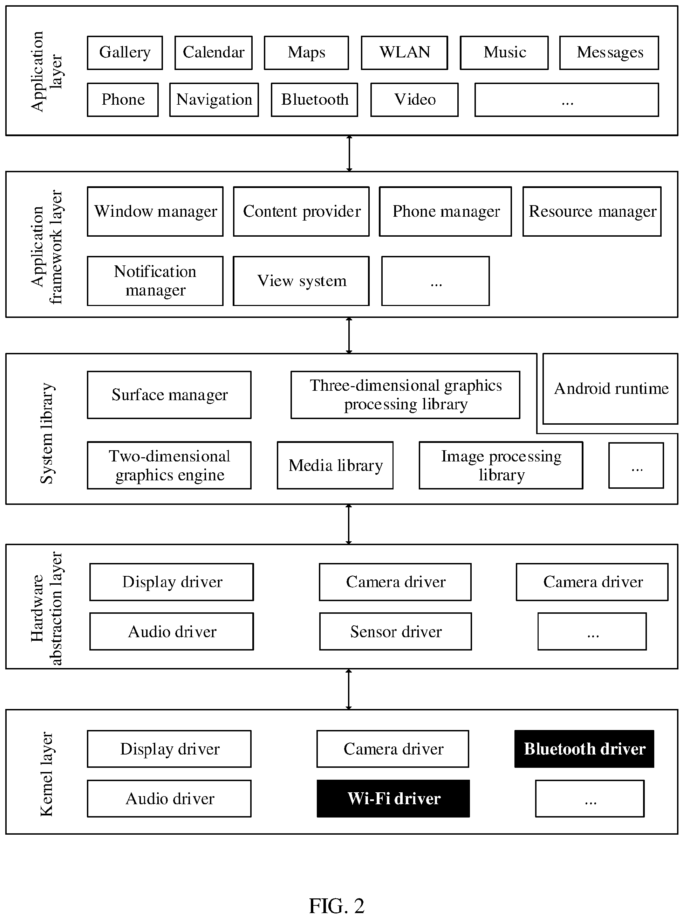

FIG. 2 is a block diagram of a software structure of the electronic device 100 according to an embodiment of the present invention.

In the layered architecture, software is divided into several layers, and each layer has a clear role and task. The layers communicate with each other through a software interface. In some embodiments, the Android system is divided into four layers: an application layer, an application framework layer, the Android runtime (Android runtime), a system library, and a kernel layer from top to bottom.

The application layer may include a series of application packages.

As shown in FIG. 2, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework to an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, an audio, calls that are made and received, a browsing history, a bookmark, a phone book, and the like.

The view system includes visual controls such as a control for displaying text and a control for displaying an image. The view system may be configured to construct an application. A display interface may include one or more views. For example, a display interface including an SMS message notification icon may include a text display view and an image display view.

The phone manager is configured to provide a communication function of the electronic device 100, for example, management of call statuses (including answering, declining, and the like).

The resource manager provides, for an application, various resources such as a localized character string, an icon, a picture, a layout file, and a video file.

The notification manager enables an application to display notification information in the status bar, and may be configured to transmit a notification-type message. The displayed information may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application running on the background or a notification that appears on a screen in a form of a dialog window. For example, text information is displayed in the status bar, an announcement is given, the electronic device vibrates, or the indicator light blinks.

The Android runtime includes a core library and a virtual machine. The Android runtime is responsible for scheduling and management of the Android system.

The kernel library includes two parts: a function that needs to be invoked in Java language, and a kernel library of Android.

The application layer and the application framework layer are run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (media library), a three-dimensional graphics processing library (for example, OpenGLES), and a 2D graphics engine (for example, SGL).

The surface manager is configured to manage a display subsystem and provide fusion of 2D and 3D layers for a plurality of applications.

The media library supports playing and recording of a plurality of common audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, a sensor driver, a Bluetooth driver, an NFC driver, and a WLAN driver.

The following describes an example of a working procedure of software and hardware of the electronic device 100 with reference to a calendar event synchronization scenario.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a touch click operation, and a control corresponding to the click operation is a control of a calendar application icon. A calendar application invokes an interface of an application framework layer, starts a calendar application, and selects to synchronize the calendar. Further, the calendar application invokes a kernel layer to start a driver such as a cellular network, Bluetooth, or Wi-Fi, and sends a message to another electronic device by using the mobile communication module 150 and/or the wireless communication module 160.

The following describes a process of automatically synchronizing a calendar event when a new device is connected to an existing home device.

There may be a plurality of different electronic devices in a home, for example, a smart TV, a computer, a smart speaker, an electronic photo frame, a tablet computer, a smart router, a floor scanning robot, smart glasses, a smartwatch, a game console, and a smart camera. Each device has a storage capability. Each device has a possibility of creating a calendar event. For example, a user may create a calendar event by using voice against a speaker or a TV; when watching TV, the user may reserve programs such as a football game based on a program list to create a calendar event; when using the game console, the user may create a calendar event for a specific task at a specific time in a game; and when using the router, the user may create a calendar event for tasks such as network rate limiting in a specific time period of the router.

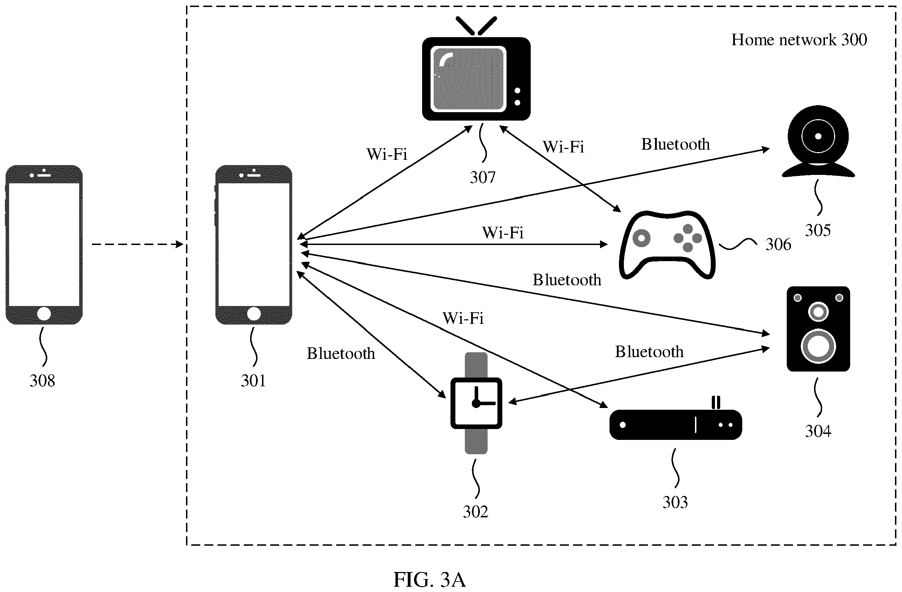

FIG. 3A is used as an example. Existing home devices include a mobile phone 301, a smartwatch 302, a smart router 303, a smart speaker 304, a smart camera 305, a smart game console 306, and a smart TV 307. The foregoing electronic devices form a "home network 300" through communication means such as Wi-Fi, Bluetooth, and NFC. Each electronic device is a node in the "home network". The mobile phone 301 is connected to the smart router 303, the smart camera 305, and the smart TV 307 through Wi-Fi. The mobile phone 301 is connected to the smartwatch 302, the smart speaker 304, and the smart game console 306 through Bluetooth. The smartwatch 302 is further connected to the smart speaker 304 through Bluetooth, and the smart TV 307 is further connected to the smart game console 306 through Wi-Fi.

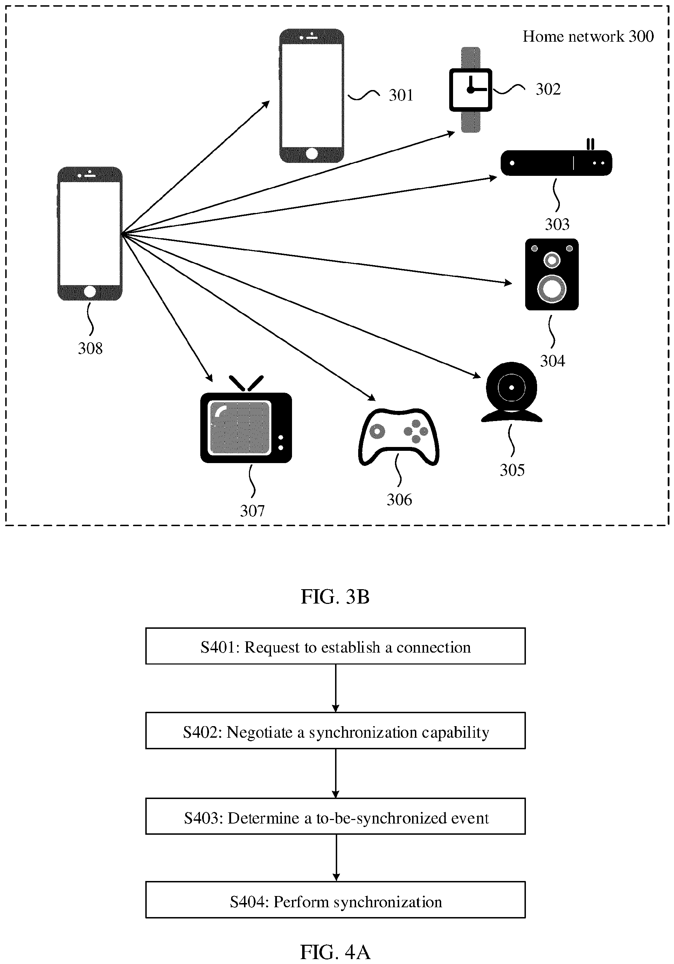

When a mobile phone 308 serving as a new device accesses the foregoing "home network", as shown in FIG. 3B, the mobile phone 308 notifies devices such as the mobile phone 301, the smartwatch 302, the smart router 303, the smart speaker 304, the smart camera 305, the smart game console 306, and the smart TV 307 in the "home network" of a calendar event synchronization capability of the mobile phone 308 in a broadcast manner. It may be understood that if there is only one existing device in the home, the new device may notify the existing device in a point-to-point manner.

A calendar event can be synchronized between different devices in the "home network". In embodiments of the present invention, all calendar events can be synchronized in a network communication manner. As shown in FIG. 4A, when the mobile phone 308 serving as the new device accesses the foregoing "home network" to synchronize a calendar event, the following several steps are included.

S401: Request to establish a connection.

When a new device is added to a group of devices, the new device notifies an existing device of an identifier, a trust level, and a calendar event synchronization capability of the new device in a broadcast manner or a point-to-point manner, and requests to establish the connection. For the new device that accesses the home network, the user can set whether to allow the new device to perform broadcast. If the new device is only an electronic device carried by a guest, the user usually does not choose to add the guest device to the home network. If the new device is an electronic device newly added by the user for a family member, the user may start a device management application, and choose to add the new device, to add the new device to the home network, so that the new device is allowed to perform broadcast for an existing device in the home network.

The new device identifier may be a unique ID of the new device, for example, a MAC address of the device, an IMEI number of the device, or an IMSI number of a SIM card.

The trust level is a lowest trust or security level at which the electronic device is allowed to establish a connection. Generally, the electronic device carries a temporary and initial trust level before delivery. When using the mobile phone, the user may set, for an event under each account, a corresponding trust level of a device to which the event can be synchronized. Optionally, that the user determines the trust level may be: In a process in which the device performs event synchronization capability negotiation, when receiving a message from an existing device, the device pops up a window for the user to select. Alternatively, that the user determines the trust level may be: The user separately sets the device later, for example, scanning a QR code of the device to modify the trust level of the device. For example, the user scans a QR code of the smart speaker by using the mobile phone, obtains a device ID SB-1029 of the smart speaker, and resets a trust level of the smart speaker from an original trust level 1 to a trust level 4.

The calendar event synchronization capability includes an event label, a synchronization policy, creating a device trustlist, and whether to combine approximate events. The event label refers to some fixed categories of events, or user-defined categories. For example, the events may be classified into a work event, a learning event, an entertainment event, a life event, and the like based on event content; the events may be classified into a very important event, an important event, a common event, an unimportant event, and the like based on importance degrees of the events; and the events may be classified into a privacy event, an open event, and the like based on whether the events are allowed to be shared with another user. The synchronization policy means that an event is synchronized to a connected device when a trust level of the connected device reaches a specific level. The device trustlist means that a device in the trustlist can synchronize an event without meeting a specific trust level in a synchronization policy of an account. Whether to combine approximate events means whether an event under an account is allowed to be combined with an event under another account. If the events are allowed to be combined, the event may be modified after combination. If the events are not allowed to be combined, a case in which the event under the account is modified does not occur.

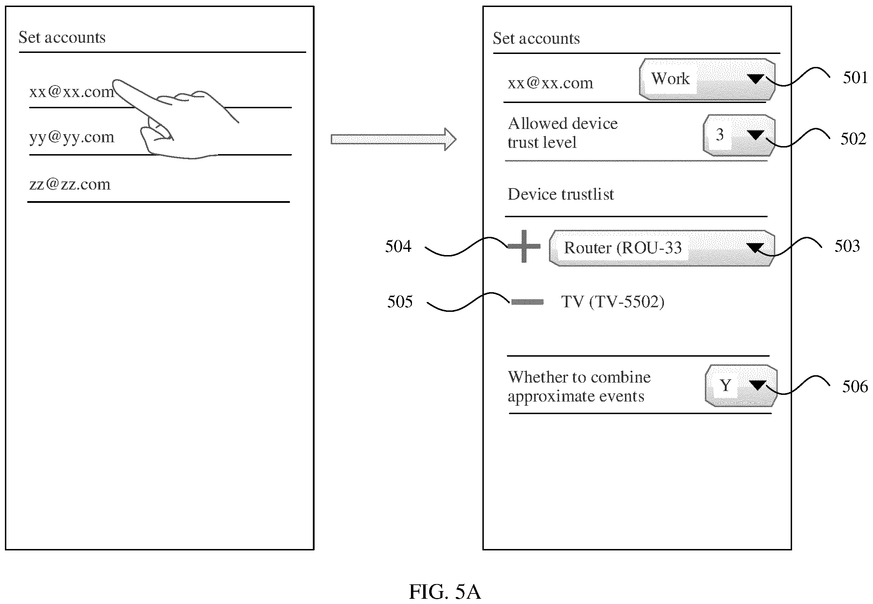

For each type of calendar event, the user may set a synchronization policy, create a device trustlist, and determine whether to combine approximate events. A specific setting process is shown in FIG. 5A to FIG. 5D. The user may log in, by using a plurality of accounts, to a calendar application installed in the device, and at least one event label may be further set under each account. As shown in FIG. 5A to FIG. 5D, a user may log in to the calendar application by using accounts xx@xx.com, yy@yy.com, and zz@zz.com. An event label corresponding to the account xx@xx.com is work, and the account zz@zz.com includes two event labels: learning and entertainment. That is, events created under the account zz@zz.com may belong to a learning label or an entertainment label.

A calendar application in the mobile phone 308 includes an account xx@xx.com, an account yy@yy.com, and an account zz@zz.com. After entering each account, the user can see an event label control 501, a setting control 502 for an allowed device trust level, an adding control 503 for a device trustlist, a selection control 504, a deletion control 505, and a setting control 506 for determining whether to combine approximate events. The event label control 501 has a drop-down menu to allow the user to set an event label to work, life, entertainment, learning, or the like. For example, the setting control 502 for an allowed device trust level provides five trust levels 0 to 4 for the user to select, or the setting control 502 may be set to "none". When the control 502 is set to one of 0 to 4, a corresponding event is synchronized to only a device whose trust level is greater than or equal to the set value. When the control 502 is set to "none", a corresponding event is not allowed to be synchronized to any device. The adding control 503 for a device trustlist enumerates a plurality of devices communicatively connected to the mobile phone 308, including but not limited to all devices in the home network 300 in FIG. 3B. The user taps the control 503 to obtain a drop-down menu to select a device. The setting control 506 for determining whether to combine approximate events also has a drop-down menu, including two options "Y" and "N". Selecting "Y" indicates that approximate events are allowed to be combined between devices, and selecting "N" indicates that approximate events are not allowed to be combined between devices.

Refer to FIG. 5A. For the account xx@xx.com, an event label 501 in a calendar is work, and the setting control 502 for an allowed device trust level in the event is set to 3, that is, the event is synchronized to only a device whose trust level is greater than 3. The device trustlist includes a TV TV-5502. For whether to combine approximate events, Y is selected, that is, it is allowed to combine approximate events. The user may add a router ROU-33 to the trustlist by tapping the control 504. It may be understood that the user may delete an existing device (a TV TV-5502) from the trustlist by tapping the control 505.

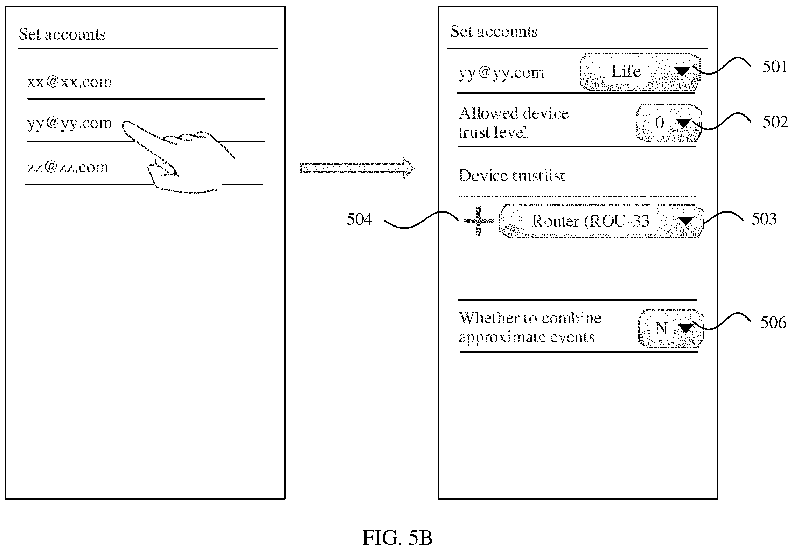

Refer to FIG. 5B. For the account yy@yy.com, an event label 501 in a calendar is life, and the setting control 502 for an allowed device trust level in the event is set to 0, that is, the event has no requirement on a trust level, and the event may be synchronized to any device. No device is added to the device trustlist. For whether to combine approximate events, N is selected, that is, it is not allowed to combine approximate events.

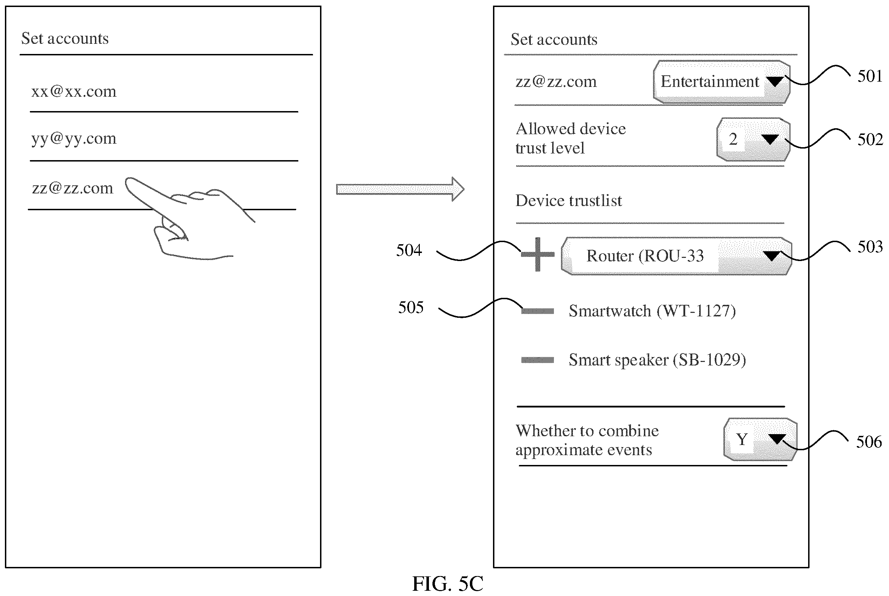

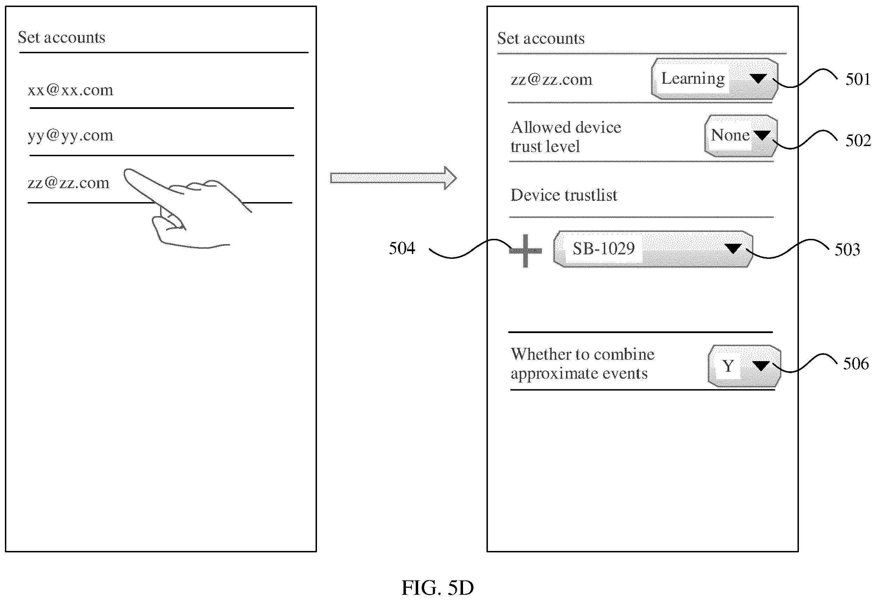

Refer to FIG. 5C and FIG. 5D. The mobile phone 308 further stores two types of events under the account zz@zz.com: entertainment and learning. The user taps the event label control 501, and may select an entertainment event or a learning event for synchronization policy setting. Refer to FIG. 5C. The setting control 502 for an allowed device trust level in the entertainment event is set to 2, that is, the entertainment event is synchronized to only a device whose trust level is greater than 2. The device trustlist includes a smartwatch WT-1127 and a smart speaker SB-1029. The router ROU-33 may be added to the device trustlist for the entertainment event by using the adding control 503. For whether to combine approximate events, Y is selected, that is, it is allowed to combine approximate entertainment events under the account zz@zz.com.

Refer to FIG. 5D. The setting control 502 for an allowed device trust level in the learning event is set to none, that is, the learning event is not synchronized to any device, and no device is added to the device trustlist. For whether to combine approximate events, Y is selected, that is, it is allowed to combine approximate events.

After the user completes the setting, for a calendar event synchronization capability table of the mobile phone 308, refer to Table 1.

**Table 1 Calendar event synchronization capability table of mobile phone 308**

| Account | Event label | Synchronization policy | Device trustlist | Whether to combine approximate events |
|---|---|---|---|---|
| xx@xx.com | Work | 3+ | TV-5502 | Y |
| yy@yy.com | Life | 0 | None | N |
| zz@zz.com | Entertainment | 2+ | WT-1127 | Y |
| | | | SB-1029 | |
| zz@zz.com | Learning | None | None | Y |

The account xx@xx.com includes a work event. The event can be synchronized to a device whose trust level is 3 or higher. A device trustlist for the event is TV-5502, and the event can be combined with an event under another account. Generally, a TV is public and has a relatively low trust level. For example, a trust level of TV-5502 in Table 1 is only 1. For a work event under the account xx@xx.com, the event can be synchronized to only a device whose trust level is 3 or higher. Therefore, TV-5502 does not meet a synchronization requirement from the perspective of trust level. However, because the user adds TV-5502 to the device trustlist for the work event under the account xx@xx.com, the work event under the account xx@xx.com can be synchronized to TV-5502.

The account yy@yy.com includes a life event. The event can be synchronized to a device at any trust level, that is, the event is open to all devices. There is no device in a device trustlist for the event, and the event cannot be combined with an event under another account. The account zz@zz.com includes an entertainment event and a learning event. The entertainment event under the account zz@zz.com can be synchronized to a device whose trust level is greater than or equal to 2. The device trustlist includes WT-1127 and SB-1029, and it is allowed to combine the entertainment event with an event under another account. The learning event under the account zz@zz.com cannot be synchronized to any device. There is no device in a device trustlist for the event, and it is allowed to combine the event with an event under another account.

In addition to a case in which a new device is added to a group of devices, when calendar event synchronization setting of a device in an existing network is updated, for example, an account is added or synchronization permission is changed, another device in the existing network also needs to be notified of an updated calendar event synchronization capability of the device in a broadcast manner.

S402: Negotiate a synchronization capability.

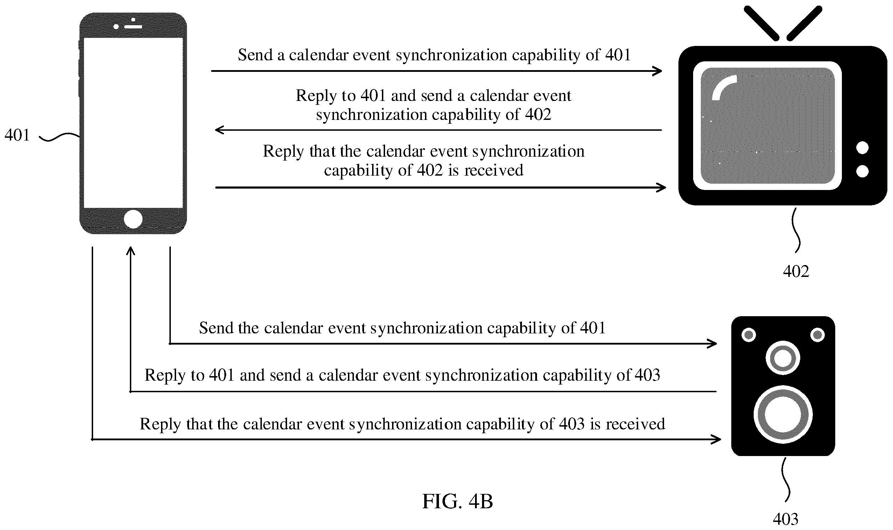

The device in the existing network replies, with response information, to the foregoing device that sends a broadcast, to complete the negotiation of the calendar event synchronization capability. The device that sends the broadcast may also reply after receiving the response from the device in the existing network, to confirm that the calendar event synchronization capability of the device in the existing network is received. FIG. 4B shows a process in which a device 401 that sends a broadcast separately performs synchronization capability negotiation with a device 402 in the existing network and a device 403 in the existing network. The device 401 sends the broadcast to the device 402 and the device 403 in the existing network, and separately sends a calendar event synchronization capability of the device 401 to the device 402 and the device 403. After receiving a message from the device 401, the device 402 replies to the device 401 and sends a calendar event synchronization capability of the device 402, to perform synchronization capability negotiation. After receiving a message from the device 402, the device 401 replies with an acknowledgment message to confirm that the calendar event synchronization capability of the device 402 is received. Similarly, after receiving the message from the device 401, the device 403 replies to the device 401 and sends a calendar event synchronization capability of the device 403, to perform synchronization capability negotiation. After receiving a message from the device 403, the device 401 replies with an acknowledgment message to confirm that the calendar event synchronization capability of the device 403 is received.

If the device 401 is a device that has not previously synchronized a calendar with the device 402 and the device 403 in the home network, when replying to the device 401, the device 402 and the device 403 each need to send a device attribute table to the device 401 in addition to a calendar event synchronization capability. After device attribute tables of the device 402 and the device 403 are sent to the device 401, the device 401 determines whether an event under a calendar account of the device is allowed to be sent to the device 402 and the device 403. For example, Table 2 shows attributes of some devices in the "home network", including a device ID, a device name, a trust level of the device, and information about whether the device is online.

**Table 2 Device attribute table**

| Device ID | Device name | Trust level | Online or not |
|---|---|---|---|
| TV-5502 | Smart TV | 1 | Y |
| WT-1127 | Smartwatch | 4 | N |
| SB-1029 | Smart speaker | 1 | Y |

If the device 401 is a device that has previously synchronized the calendar with the existing devices 402 and 403 in the home network, when calendar event synchronization setting of the device 401 is updated, for example, when an account is added or synchronization permission is changed, the calendar event synchronization capability of the device 401 and updated messages such as a trust level and whether the device is online in the device attribute table also need to be broadcast to the existing device in the network.

When sending an event synchronization capability, a new device sends, to the device in the existing network, a device attribute table including a new device ID, a device name, and a trust level. In this way, the device in the existing network may determine the name, the trust level, and the like of the new device according to the device attribute table, so as to determine which events can be synchronized to the new device.

S403: Determine a to-be-synchronized event.

A device that newly accesses a network obtains a calendar event synchronization capability of an existing device, selects a to-be-synchronized event, and sends, to a device that meets a trust level requirement, an event that is allowed to be shared. After performing synchronization processing, a corresponding device sends a synchronized event. For example, the mobile phone 308 that newly accesses the network learns that currently online existing devices are the smart TV 307 and the smart speaker 304.

For the smart TV, an event that is in the mobile phone 308 and that can be synchronized to the smart TV is the work event under the account xx@xx.com and the life event under the account yy@yy.com. The learning event under the account zz@zz.com is not open to another device. The entertainment event under the account zz@zz.com is synchronized to only a device whose trust level is 2 or higher. Because a trust level of the smart TV is only 1 and the smart TV is not in the device trustlist for the entertainment event, the learning event and the entertainment event of the mobile phone 308 are not synchronized to the smart TV.

For the smart speaker, an event that is in the mobile phone 308 and that can be synchronized to the smart speaker is the life event under the account yy@yy.com and the entertainment event under the account zz@zz.com. The entertainment event under the account zz@zz.com is synchronized to only the device whose trust level is 2 or higher, and a trust level of the smart speaker is only 1. However, because the smart speaker is in the device trustlist for the entertainment event under the account zz@zz.com, the entertainment event under the account zz@zz.com can also be synchronized to the smart speaker.

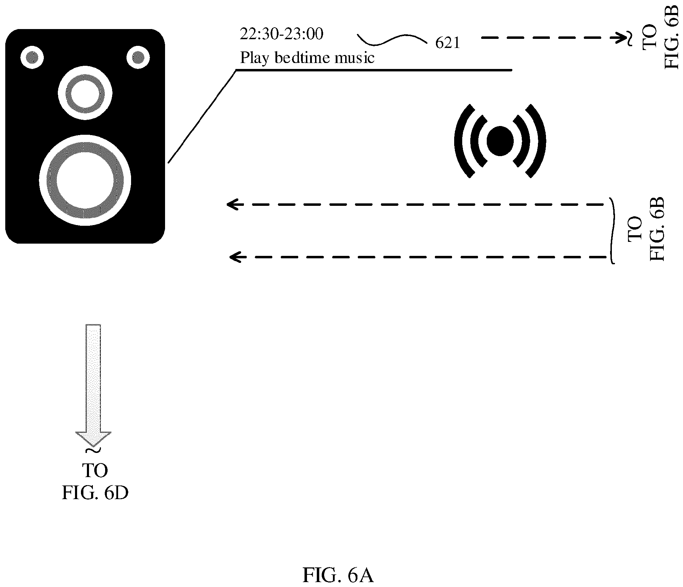

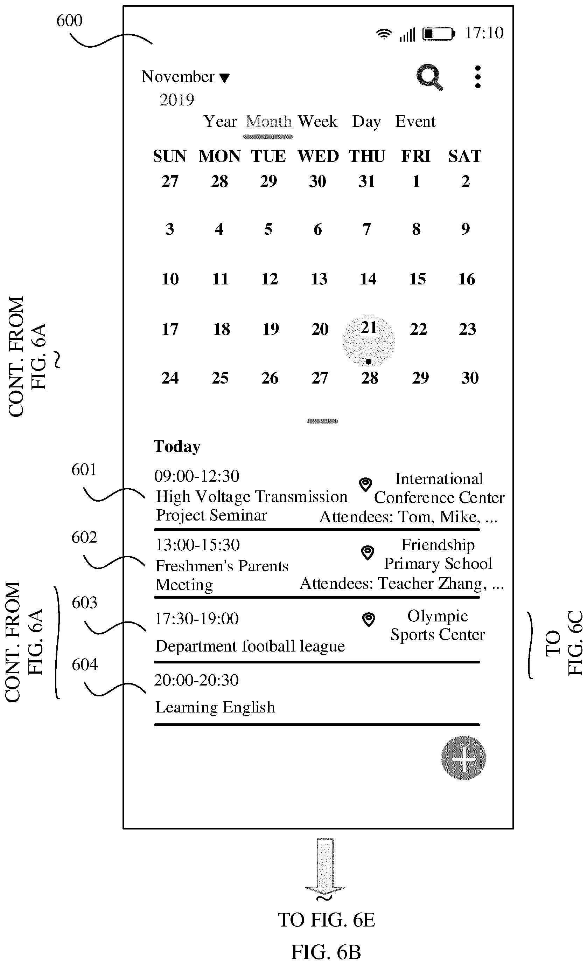

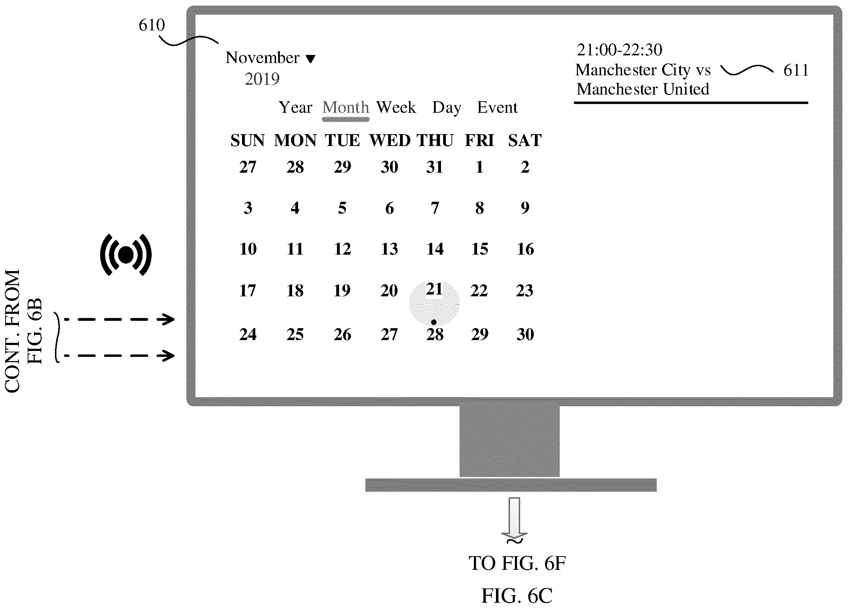

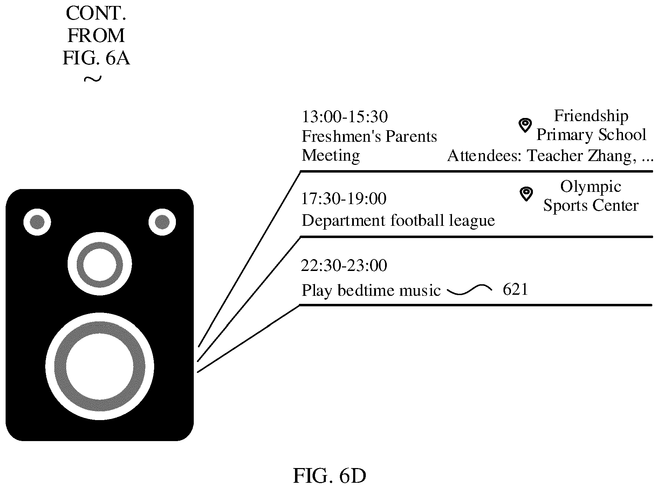

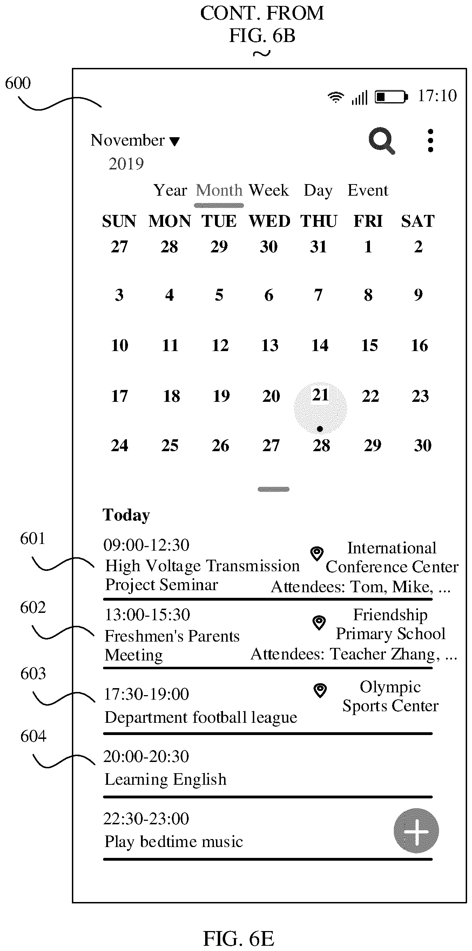

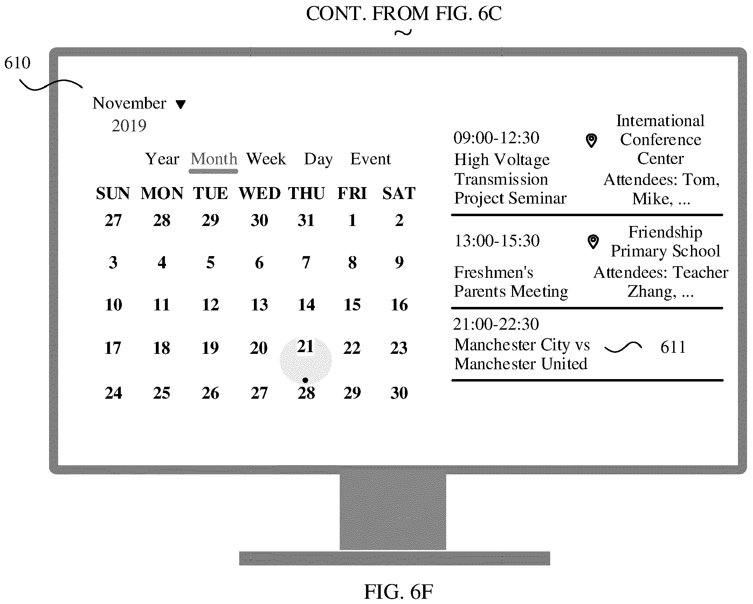

FIG. 6A to FIG. 6F show a graphical user interface 600 of the mobile phone 308. The graphical user interface 600 displays events of the mobile phone on the current day, including a work event 601 on the current day under the account xx@xx.com of the mobile phone: "High Voltage Transmission Project Seminar" at the International Conference Center at 9:00-12:30; a life event 602 on the current day under the account yy@yy.com: Freshmen's Parents Meeting held in the Friendship Primary School at 13:00-15:30; an entertainment event 603 on the current day under the account zz@zz.com: department football league held in the Olympic Sports Center at 17:30-19:00; and a learning event 604 under the account zz@zz.com on the current day: learning English at 20:00-20:30. The first two events, namely, the work event 601 and the life event 602 in the foregoing four events are to-be-synchronized events that are determined by the mobile phone 308 based on an event synchronization capability of the mobile phone 308 and that are to be sent to the smart TV The life event 602 under the account yy@yy.com, namely, Freshmen's Parents Meeting held in the Friendship Primary School at 13:00-15:30, and the entertainment event 603 under the account zz@zz.com, namely, department football league held in the Olympic Sports Center at 17:30-19:00, are to-be-synchronized files selected by the mobile phone 308 and sent to the smart speaker.

S404: Synchronize the event.

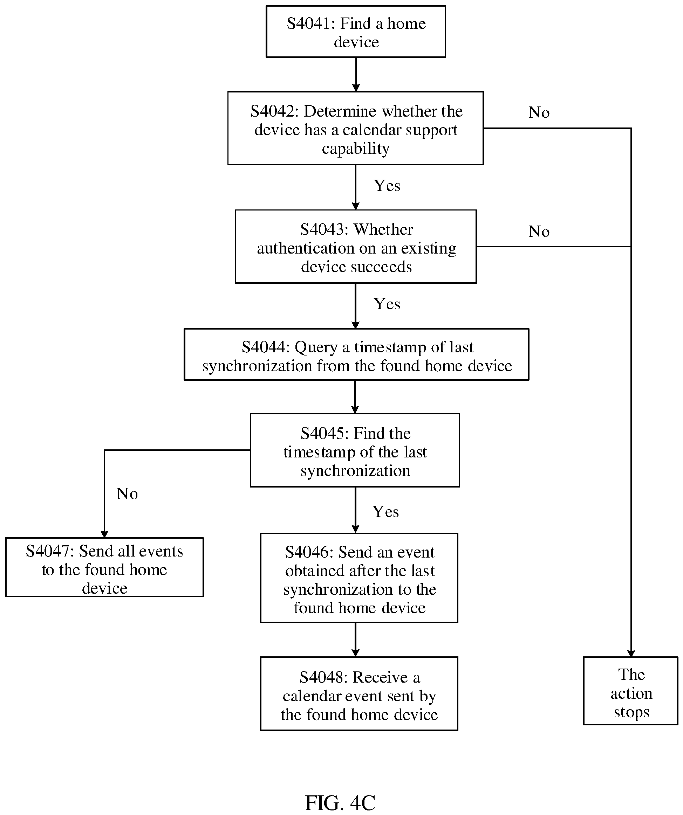

The following describes a process in which the device in the existing network performs event synchronization. Refer to FIG. 4C.

S4041: The existing device receives a broadcast notification from a device that newly accesses the network, and finds the home device that newly accesses the network.

S4042: The existing device determines whether the new device has a calendar support capability. The calendar support capability means that there is a calendar account allowed to share an event. The existing device may perform determining by using a calendar event synchronization capability table sent by the new device. For example, in Table 1, the mobile phone 308 that newly accesses the network has a plurality of calendar accounts that are allowed to share an event, such as xx@xx.com, yy@yy.com, and zz@zz.com. Therefore, the mobile phone 308 has the calendar support capability. If the existing device determines that the new device does not have the calendar support capability, the action stops.

S4043: After determining that the new device has the calendar support capability, the existing device further determines whether authentication on the existing device succeeds. That is, the existing device needs to be a device with which a calendar account of the new device can be synchronized. Specifically, a trust level of the existing device needs to be higher than a trust level required in a calendar account synchronization policy, except that the existing device is included in a device trustlist. For example, for the work event under the account xx@xx.com of the mobile phone 308 that newly accesses the network, the trust level of the existing device needs to be 3 or higher, so that the work event under the account can be synchronized to the existing device, unless the existing device is the smart TV whose name is TV-5502. If the existing device is the smart speaker whose name is SB-1029, and the trust level of the smart speaker is only 1, the smart speaker fails to pass event authentication under the account xx@xx.com of the mobile phone 308. If device authentication fails, the action stops.

S4044: If authentication on the existing device succeeds, query a timestamp of last synchronization from the new device.

S4045: The new device replies with the timestamp of the last synchronization to the existing device, to find the timestamp of the last synchronization. This step is mainly applicable to a case in which the new device leaves the home network for a time period and returns to the home network again, or calendar event synchronization setting of a device in the existing network is updated, for example, an account is added or synchronization permission is changed. Because the device does not perform synchronization with the existing device for the first time, the timestamp of last synchronization exists.

S4046: If the timestamp of last synchronization is found, it indicates that the device that newly accesses the network has previously performed event synchronization with the existing device. In this case, an event obtained after the last synchronization is sent to the new device (that is, differential synchronization).

S4047: If no timestamp of last synchronization is found, it indicates that the device that newly accesses the network has not performed event synchronization with the existing device before. In this case, all events are sent to the new device (that is, full synchronization). The events are events that can be set by the user and that are within a specific time period. In addition, for the events, it is required that the new device meets requirements on a synchronization policy and a device trustlist for an event in the existing device. For example, the existing device is the smart speaker whose name is SB-1029. Refer to Table 3. There is only an entertainment event under an account ss@ss.com in the smart speaker, and the entertainment event is open to the device whose trust level is 2 or higher. The user sets the smart speaker to synchronize an event on the current day. Refer to FIG. 6A to FIG. 6F. An event 621 under the smart speaker on the current day is to play bedtime music at 22:30-23:00. After the smart speaker finds the mobile phone 308, it is determined that the mobile phone 308 has the calendar support capability, the trust level of the smart speaker meets a trust level requirement for the life event under the account yy@yy.com of the mobile phone 308 and a trust level requirement for the entertainment event under the account zz@zz.com of the mobile phone 308, and the mobile phone 308 has not previously synchronized the event with the smart speaker. Therefore, the smart speaker sends the event 621 on the current day to the mobile phone 308.

**Table 3 Calendar event synchronization capability table of smart speaker**

| Account | Event label | Synchronization policy | Device trustlist | Whether to combine approximate events |
|---|---|---|---|---|
| ss@ss.com | Entertainment | 2+ | None | Y |

S4048: After sending the event, the existing device receives a to-be-synchronized event sent by the new device. The smart speaker whose name is SB-1029 is still used as an example. After an entertainment event under the account ss@ss.com of the smart speaker is sent to the mobile phone 308, the smart speaker receives the to-be-synchronized event sent by the mobile phone 308 to the smart speaker, including the life event under the account yy@yy.com: Freshmen's Parents Meeting held in the Friendship Primary School at 13:00-15:30, and the entertainment event under the account zz@zz.com: department football league held in the Olympic Sports Center at 17:30-19:00.

Refer to FIG. 6A to FIG. 6F. The mobile phone 308 has synchronized the life event 602 under the account yy@yy.com and the entertainment event 603 under the account zz@zz.com to the smart speaker; and at the same time, the smart speaker also synchronizes the entertainment event under the account ss@ss.com to the mobile phone 308. For the smart TV, as shown in Table 4, the user sets a synchronization policy of the entertainment event under an account tt@tt.com of the smart TV to none. After the smart TV finds the mobile phone 308 and determines that the mobile phone 308 has the calendar support capability, and the trust level of the smart TV meets a trust level requirement for the work event under the account xx@xx.com of the mobile phone 308 and a trust level requirement for the life event under the account yy@yy.com of the mobile phone 308, the smart TV chooses not to send the entertainment event of the smart TV, and directly receives the work event 601 under the account xx@xx.com of the mobile phone 308 and the life event 602 under the account yy@yy.com of the mobile phone 308.

**Table 4 Calendar event synchronization capability table of smart TV**

| Account | Event label | Synchronization policy | Device trustlist | Whether to combine approximate events |
|---|---|---|---|---|
| tt@tt.com | Entertainment | None | None | Y |

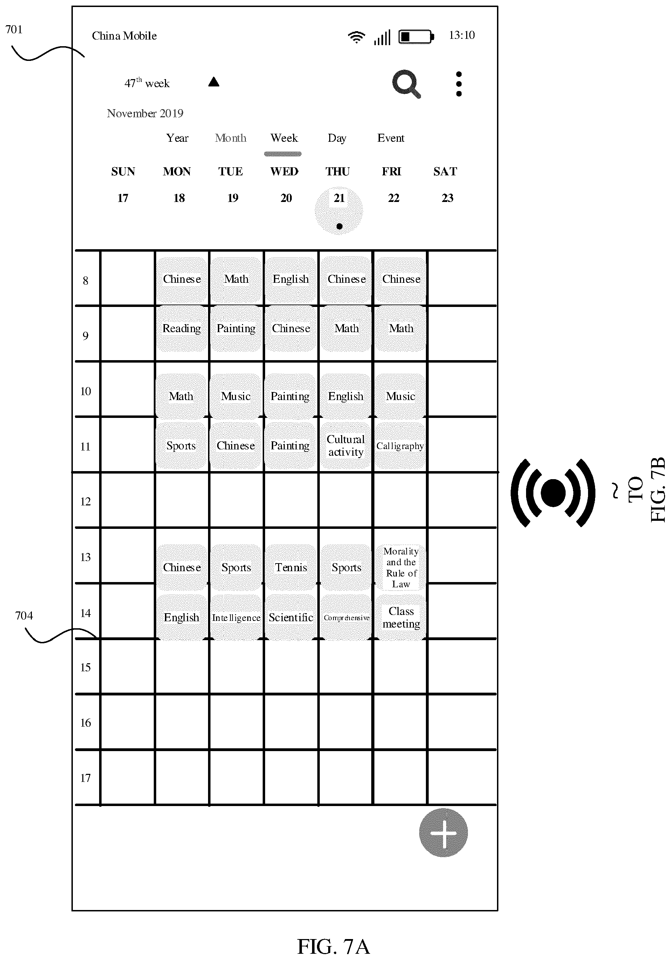

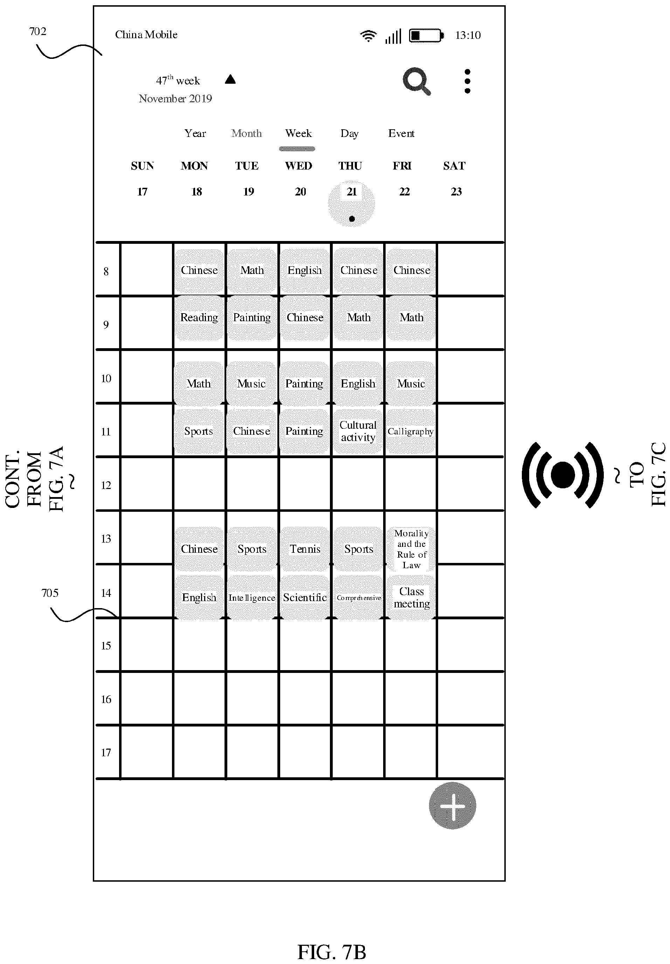

Event synchronization enables all family members to behavior the same. For example, if a child goes to school and either of the couples sets a school schedule and a course schedule, the family can know the behavior, and all devices (such as a speaker) in the family can query the behavior. As shown in FIG. 7A to FIG. 7C, the wife sets, in a life event under an account aa@aa.com of the mobile phone 701, a course schedule 704 of the child in this semester, sets a synchronization policy of the event to a trust level higher than 4, and sets a smart speaker 703 in the device trustlist. When a mobile phone 702 of the husband, the smart speaker 703, and the mobile phone 701 are located in a same home network, an event update in the mobile phone 701 triggers event synchronization of devices in the home network. Because a trust level of the mobile phone 702 of the husband is 4, and the smart speaker 703 is in the device trustlist for the life event under the account aa@aa.com of the mobile phone 701, the updated course schedule 704 is synchronized to the mobile phone 702 and the smart speaker 703. The husband can view a course schedule 705 of the child on the mobile phone without a need to set the event again, and other family members such as grandfather and grandmother can learn a daily course schedule 706 of the child through the smart speaker.

According to an event synchronization method in this embodiment of the present invention, original dependency of event synchronization on a server and a user account is broken, and event information is sent in a plurality of near field communication manners, which are not limited to communication means such as Wi-Fi, Bluetooth, Thread, Zigbee, Lora, Sigfox, and a cellular network. In addition, according to the method in this embodiment of the present invention, if the new device added to the home network is disconnected from the home network for a time period, and then accesses the home network again, calendar synchronization may be automatically started without user intervention. A timestamp is checked during event synchronization. Whether to perform differential synchronization or full synchronization is automatically determined based on the timestamp. This greatly improves synchronization efficiency, and improves user experience. In terms of security, during event synchronization, synchronized calendar event data is selected according to the foregoing device authentication manner, so that the user can set a trust level, a device trustlist, and the like of a synchronized home device based on importance and privacy of an event, and distinguish corresponding synchronized devices for different events. This supports synchronization of a part of event.

In some embodiments, after the synchronization is completed, the new device or the existing device combines same or similar events. The same event herein means that titles, time, and locations of two events are completely the same, and the similar event means that at least one piece of information of the information such as titles, the time, and the locations of the two events is not the same. For ease of description, a same or similar event is referred to as an approximate event for short below.

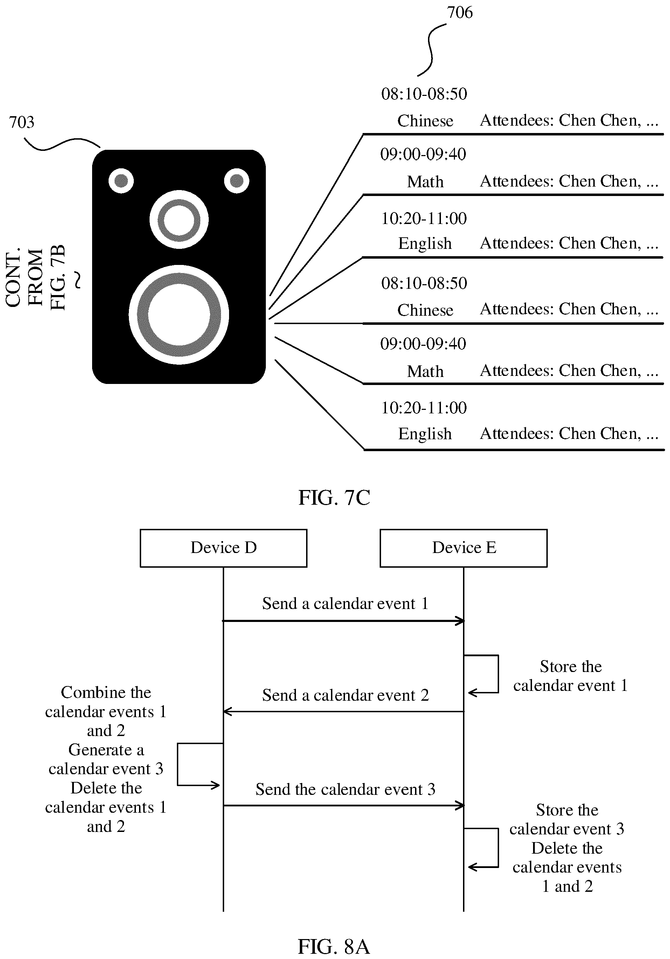

The device that performs combination is a device that last receives a synchronized calendar event. Refer to an event combination flowchart shown in FIG. 8A. A device D sends a calendar event 1 to a device E, and the device E stores the calendar event 1. A calendar event 2 approximate to the calendar event 1 is found in the device E, and the device E sends the calendar event 2 to the device D. The device D is a device that last receives the synchronized calendar event. The device D combines the calendar event 1 and the calendar event 2 to generate a new calendar event 3, and deletes the repetitive calendar event 1 and calendar event 2. The device D sends the new calendar event 3 to the device E, and the device E stores the new calendar event 3, and deletes the repetitive calendar event 1 and calendar event 2. So far, combination of calendar events is completed, the latest calendar events 3 exists in both the device D and the device E, and both the repetitive calendar event 1 and calendar event 2 are deleted.

In some embodiments, more than three devices perform event combination. The device D sends a calendar event to all devices, the device E and many subsequent devices send an approximate event to the device D, and the device D combines the events to generate a combined event, and sequentially sends the combined event to each device. After receiving a calendar event returned by the device E, the device D has a waiting period to wait for another device to return an approximate event. After the waiting period expires, the device D combines all currently received approximate events and then sends a combined event to all the devices. If the another device does not return the approximate event until after the waiting period, the device D re-combines the events and sends a combined event to all devices for synchronization.

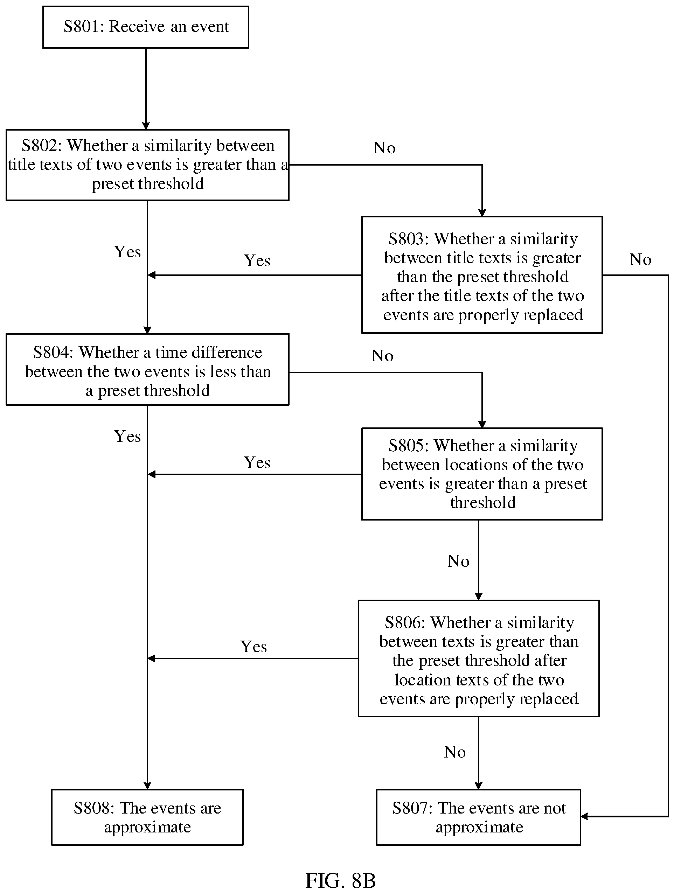

In some embodiments, the approximate event is determined according to a procedure shown in FIG. 8B. It should be noted that a method for determining and combining approximate events is not limited to synchronization of an event in a device in a family group, and may also be applicable to synchronization of a single event shared by a user, synchronization of an event in a device in a working group, and the like. For example, a user A is an insurance account manager of a user B. The user A establishes, in a mobile phone of the user A, an event of discussing an insurance contract in a cafe at 3 p.m., and the user B also establishes an approximate event in a mobile phone of the user B. Subsequently, the user A adds a discussed insurance contract attachment to the event, and sends the event to the user B by using WeChat, an email, or the like. The mobile phone of the user B performs a method for determining and combining approximate events, to obtain the insurance contract attachment.

S801: Receive an event. After receiving the event, a receiving device finds that there are two events in a same time period (for example, picking up a child at 5 p.m. and going to the Friendship Primary School at 5 p.m.), or there are two events with similar titles on the same day (for example, picking up a child at 5 p.m. and picking up a child after work), and the device automatically starts a process of determining an approximate event. Optionally, after receiving the event, the device prompts the user, and the user confirms to start the process of determining the approximate event, and compares a received event with an original event in the receiving device.

S802: Determine whether a similarity between title texts of the two events is greater than a preset threshold. First, the title texts of the two events are compared to obtain the similarity between the title texts of the two events. If the similarity between the title texts of the two events is greater than the preset threshold, step S804 is further performed. If the similarity between the title texts of the two events is less than or equal to the preset threshold, step S803 is further performed. The preset threshold may be set relatively high, for example, 98%, to avoid mistakenly determining different events as approximate events.

S803: Determine whether a similarity between title texts is greater than the preset threshold after the title texts of the two events are properly replaced. The text replacement herein means a replacement rule of some texts stored in a calendar application or stored on a calendar server and updated timely, for example, some common word substitutions such as National Library of China -> National Library of China, Renmin University of China -> Renmin University of China, Tsinghua University -> Tsinghua University, Caishikou Department Store -> Caishikou Department Store, attending a meeting -> attending a meeting, watching the Premier League -> watching a football game. After the text replacement, if the similarity between the title texts of the two events is greater than the preset threshold, the step S804 is further performed. If the similarity between the title texts of the two events is less than or equal to the preset threshold, step S807 is further performed. It is determined that the two events are not approximate.

S804: Determine whether a time difference between the two events is less than a preset threshold. The title texts of the two events are determined, to determine that the similarity between the title texts of the two events is greater than the preset threshold, or after the text replacement, it is determined that the similarity between the title texts of the two events is greater than the preset threshold. The time difference between the two events is further compared. If the time difference between the two events is less than the preset threshold, step S808 is performed to determine that the two events are approximate. If the time difference between the two events is relatively large and is greater than or equal to the preset threshold, step S805 is further performed to determine a similarity between the locations of the events. A preset threshold of the time difference may be set relatively low, for example, overlapping time exceeds 50%.

S805: Determine whether a similarity between locations of the two events is greater than a preset threshold. For example, text descriptions of the locations of the two events are compared to obtain the similarity between the locations of the two events. Alternatively, it may be compared whether the locations of the two events are within a preset distance, for example, within 50 m of a building. If the similarity between the locations of the two events is greater than the preset threshold, the step S808 is further performed. If the similarity between the location texts of the two events is less than or equal to the preset threshold, step S806 is further performed. The preset threshold may be set relatively high, for example, 97%, to avoid mistakenly determining different events as approximate events.

S806: Determine whether a similarity between texts is greater than the preset threshold after location texts of the two events are properly replaced. The text replacement herein also means a replacement rule of some texts stored in a calendar application or stored on a calendar server and updated timely, for example, some common word substitutions such as National Library of China -> National Library of China, Renmin University of China -> Renmin University of China, Tsinghua University -> Tsinghua University, Caishikou Department Store -> Caishikou Department Store. After the text replacement, if the similarity between the location texts of the two events is greater than the preset threshold, the step S808 is further performed to determine that the two events are approximate. If the similarity between the location texts of the two events is less than or equal to the preset threshold, the step S807 is further performed. It is determined that the two events are not approximate.

S807: The events are not approximate. After titles, time difference, locations, and the like between the two events are determined, or the similarity between the title texts is less than the preset threshold, or the time difference is relatively large and the similarity between the location texts is also less than the preset threshold, the two events are determined to be not approximate, and the two events are not combined.

S808: The events are approximate. After the titles, time difference, locations, and the like between the two events are determined, or the similarity between the title texts is relatively high and the time difference is also relatively small, or the time difference is relatively large but the similarity of the location texts is relatively high, the two events are determined to be approximate. In this case, the two events are combined in a next step.

The approximate events are combined, so that tasks of a plurality of persons or devices can be synchronized, to avoid confusion. In this embodiment, combination of the approximate events may be combination of a plurality of participants. That is, when a new event is generated, a plurality of original device users are all added to participants of the new event.

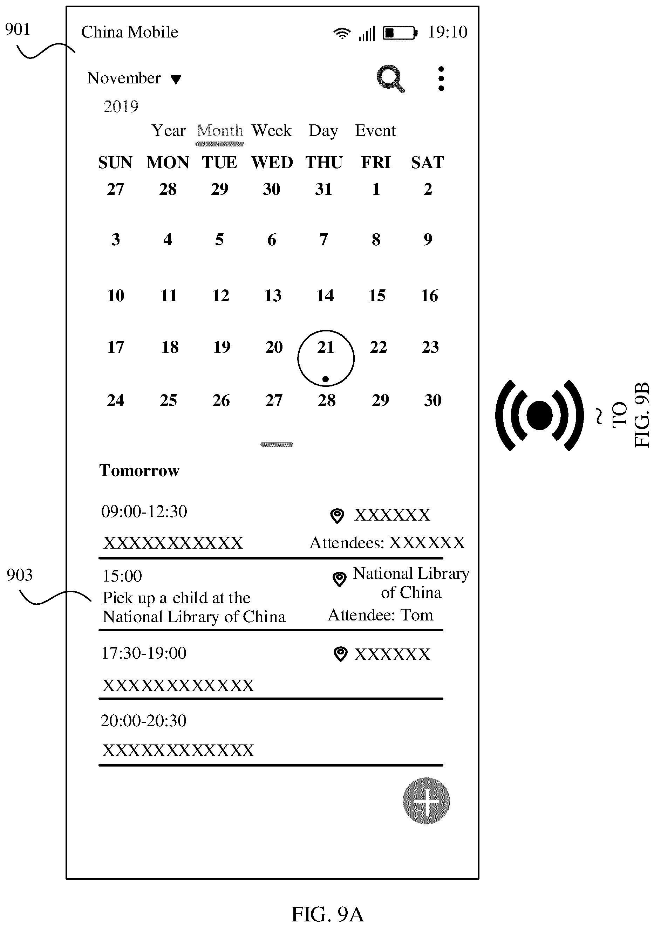

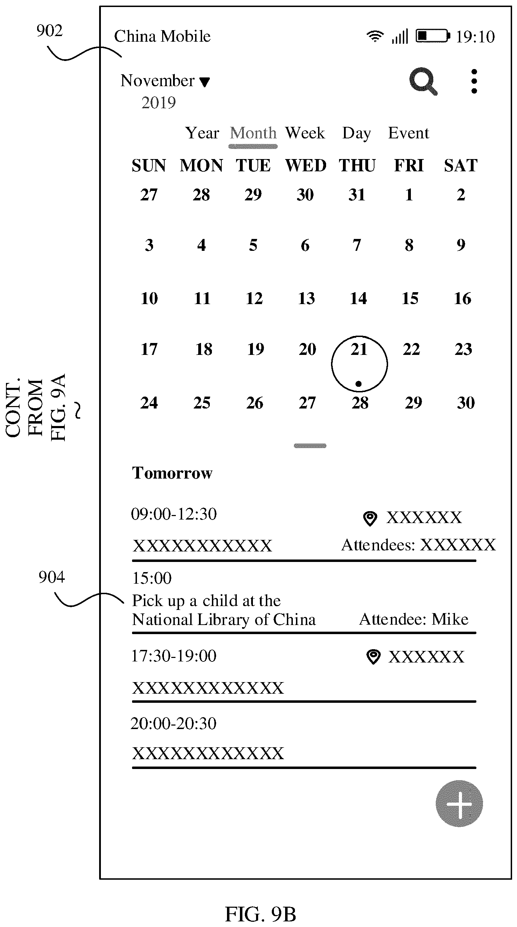

As shown in FIG. 9A, a graphical user interface of Tom's mobile phone is 901, and an event 903 in the afternoon of November 21, 2019 is to pick up a child at 3 p.m. in the National Library of China. As shown in FIG. 9B, a graphical user interface of Mike's mobile phone is 902, Mike is Tom's wife, and an event 904 in the afternoon of November 21, 2019 is to pick up a child at 3 p.m. at the National Library of China. In the evening of November 20, when Tom and Mike return to home and their mobile phones access the home network, processes of synchronizing an event and determining an approximate event starts. Tom's mobile phone is a mobile phone that performs event combination. After comparing conditions such as title texts, time difference, and locations between the two events, it is determined that the event 903 and the event 904 are approximate events.

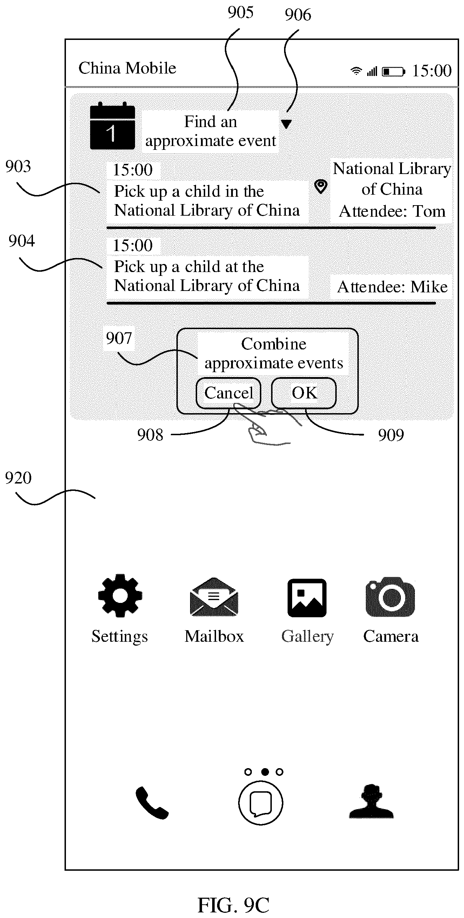

A determining result is reminded on Tom's mobile phone to notify the user to perform confirmation. Refer to FIG. 9C. A calendar reminder card 905 pops up on a graphical user interface 920 of Tom's mobile phone, including an expansion control 906 and an approximate event combination card 907. Optionally, the user taps the expansion control 906 to further display the event 903 and the event 904, and taps the expansion control 906 again to collapse the event 903 and the event 904. The approximate event combination card 907 includes a cancellation control 908 and a determining control 909. After seeing the calendar reminder card 905, Tom negotiates with Mike to determine that Mike completes the event, and taps the cancellation control 908.

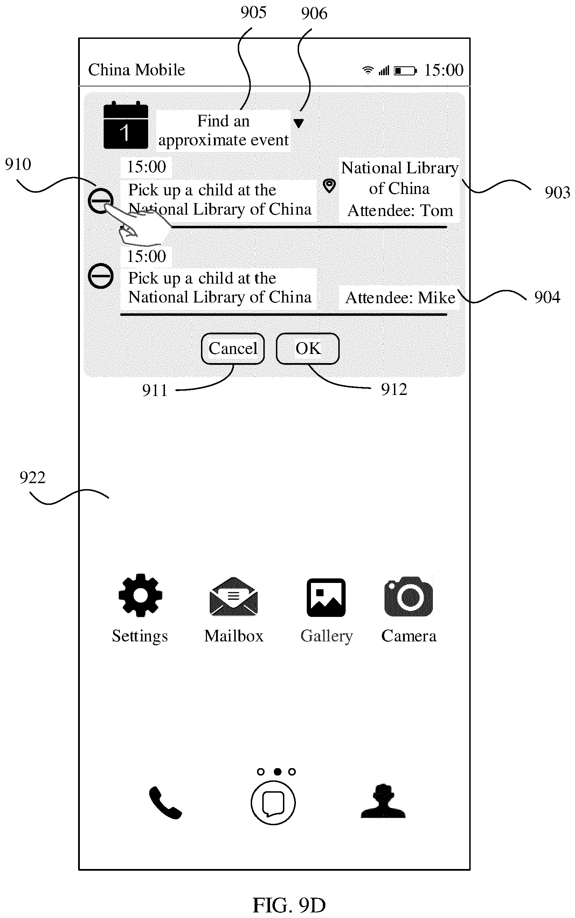

As shown in FIG. 9D, after the cancellation control is tapped, the approximate event combination card 907 is no longer displayed on the graphical user interface 922 of Tom's mobile phone, and a delete control 910 is added to the left side of the event 903 and the event 904. Tom may tap the delete control 910, and select to delete the event 903. After the foregoing operations are completed, Tom taps the determining control 912 of the calendar reminder card 905 to save the foregoing selection.

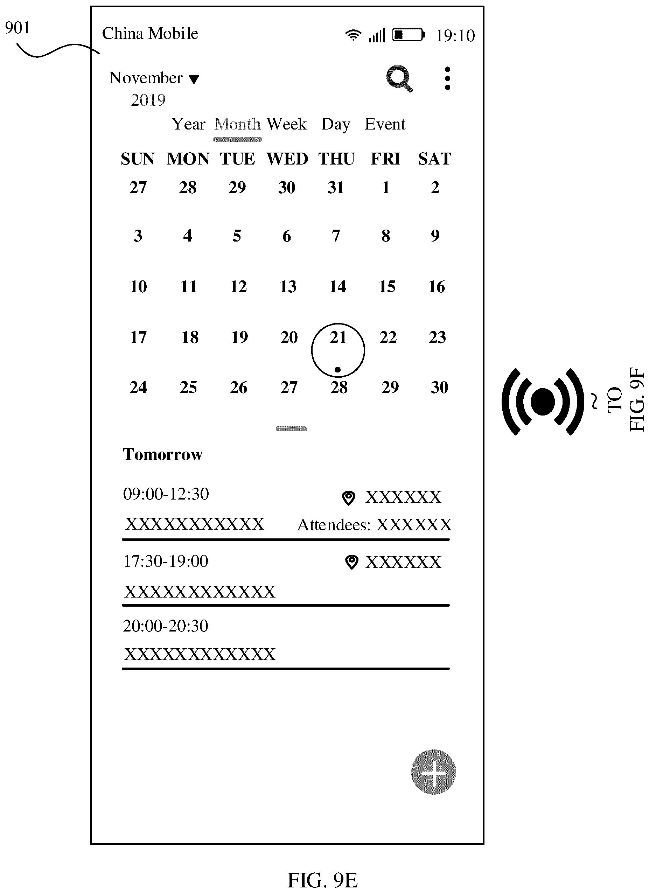

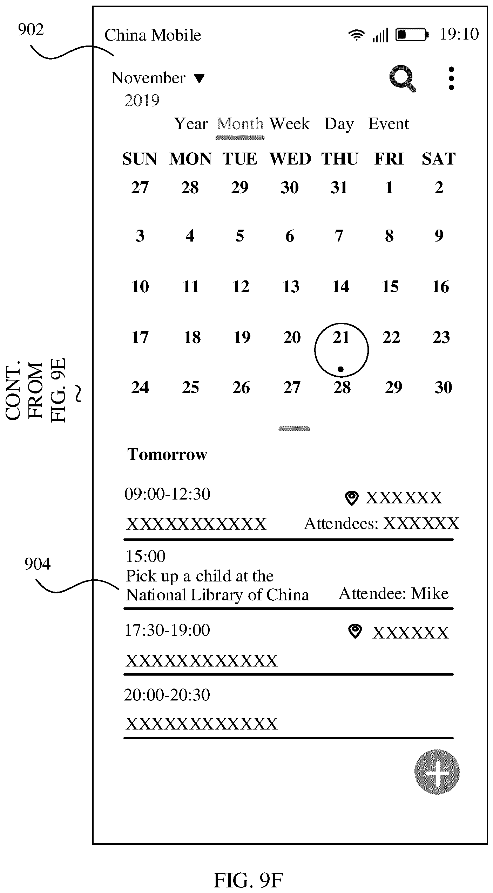

Refer to FIG. 9E. Return to a calendar interface of Tom's mobile phone. The event 903 tomorrow is deleted. Refer to FIG. 9F. The event 904 is reserved on a calendar interface of Mike's mobile phone.

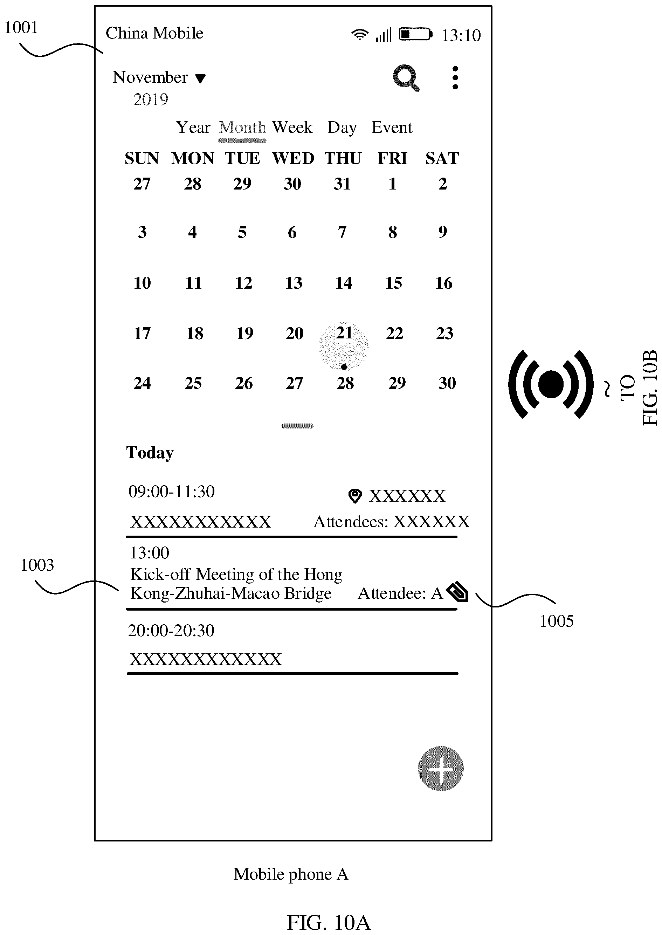

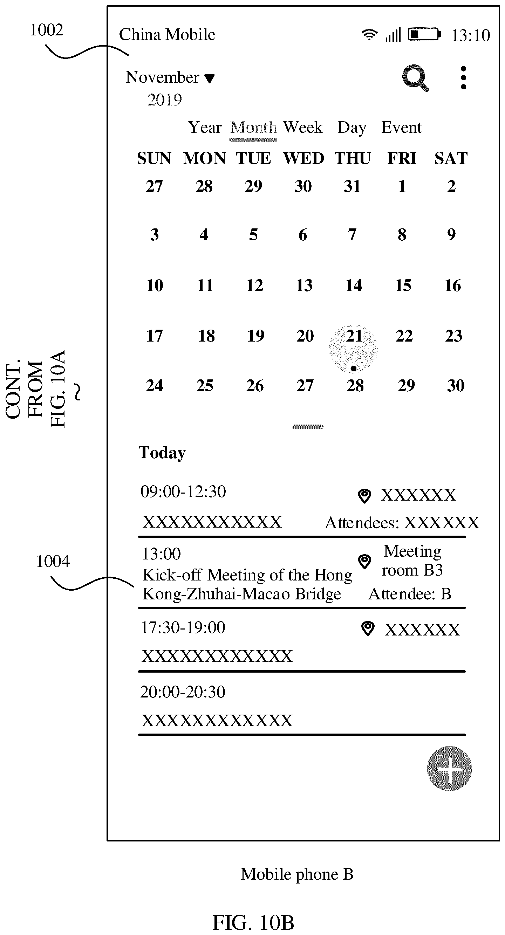

The foregoing combination of the approximate events may also be applied to a working scenario. For example, mobile phones of engineers A and B are added to a same group in advance, or the engineer A shares an event of the engineer A with the engineer B by using a mobile phone. If several colleagues attend a same meeting, as shown in FIG. 10A, a user interface 1001 of a mobile phone A of the engineer A displays an event 1003: kick-off meeting of the Hong Kong-Zhuhai-Macao Bridge at 13 o'clock today, participant: A, and attachment: design drawing 1005 of the Hong Kong-Zhuhai-Macao Bridge. As shown in FIG. 10B, a user interface 1002 of a mobile phone B of the engineer B displays an event 1004: commencement of the Hong Kong-Zhuhai-Macao Bridge at 13 o'clock today, location: meeting room B3, and participant: B.

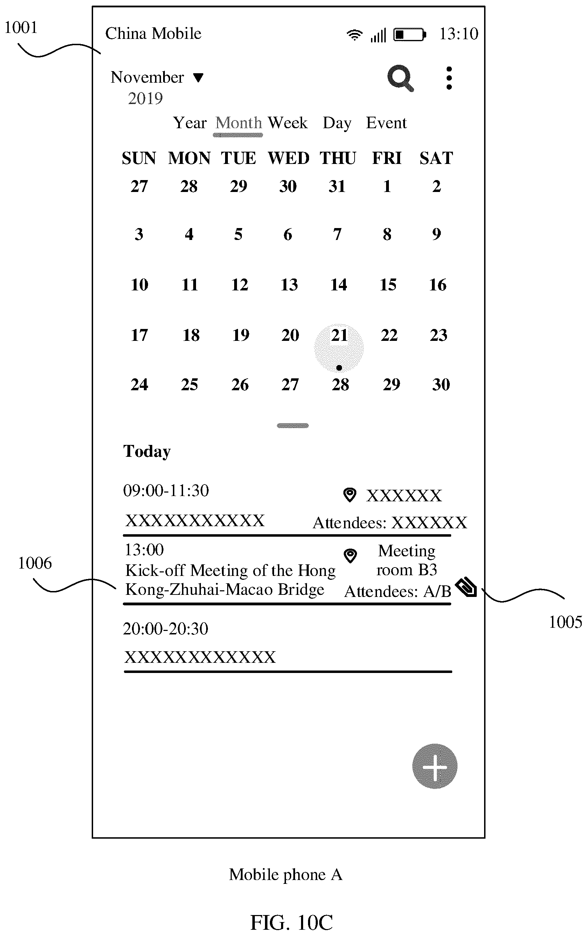

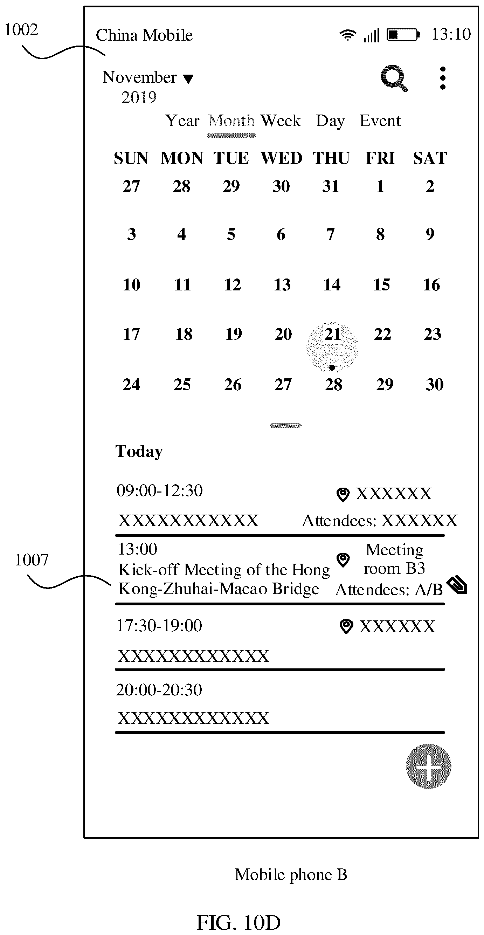

The mobile phones of the engineers A and B are added to a same group in advance, and an event synchronization function has been enabled. After the mobile phones of the two engineers are connected through Bluetooth or NFC, the two events can be combined. Both mobile phones will receive a combined event. Refer to FIG. 10C. A display interface 1001 of the mobile phone A of the engineer A displays an event 1006: kick-off meeting of the Hong Kong-Zhuhai-Macao Bridge at 13 o'clock today, location: meeting room B3, participant: engineer A/engineer B, and attachment: design drawing 1005 of the Hong Kong-Zhuhai-Macao Bridge. As shown in FIG. 10D, a display interface 1002 of the mobile phone of the engineer B displays an event 1007: kick-off meeting of the Hong Kong-Zhuhai-Macao Bridge at 13 o'clock today, location: meeting room B3, participant: engineer A/engineer B, and attachment: design drawing 1005 of the Hong Kong-Zhuhai-Macao Bridge. It can be learned that the combined event 1006 is the same as the event 1007. The mobile phone modifies an event title to a more complete title, supplements participants, and supplements locations and attachments that are missing from each other, so that events of both parties are supplemented.

In a possible implementation, when an attachment shown in FIG. 10A is relatively large, the attachment in the mobile phone A cannot be quickly sent to the mobile phone B through Bluetooth. In this case, a Wi-Fi direct connection may be established between the mobile phone A and the mobile phone B, and then the drawing is sent from the mobile phone A to the mobile phone B through a Wi-Fi channel.

In another possible implementation, if the engineer A cannot attend the event 1003 shown in FIG. 10A on the current day, through negotiation, the engineer B carries the drawing to attend the kick-off meeting of the Hong Kong-Zhuhai-Macao Bridge. In this case, a Wi-Fi direct connection may also be established between the mobile phone A and the mobile phone B, and then the drawing is sent from the mobile phone A to the mobile phone B through a Wi-Fi channel.

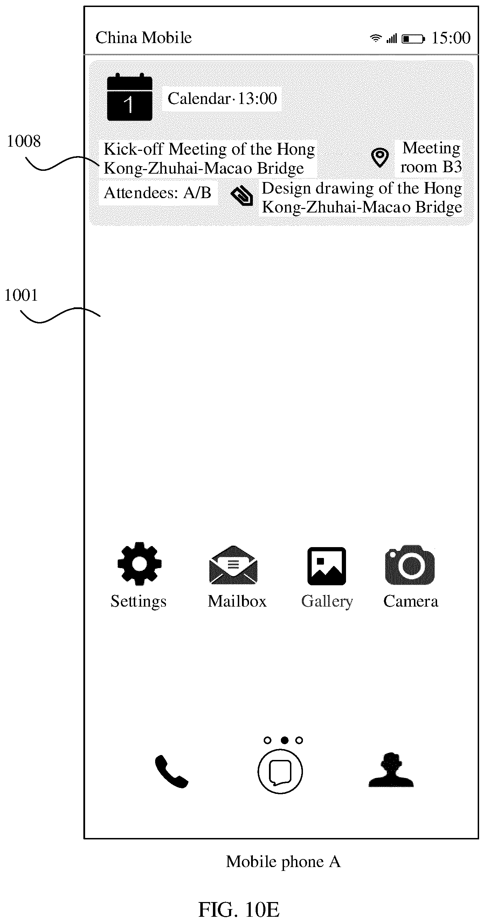

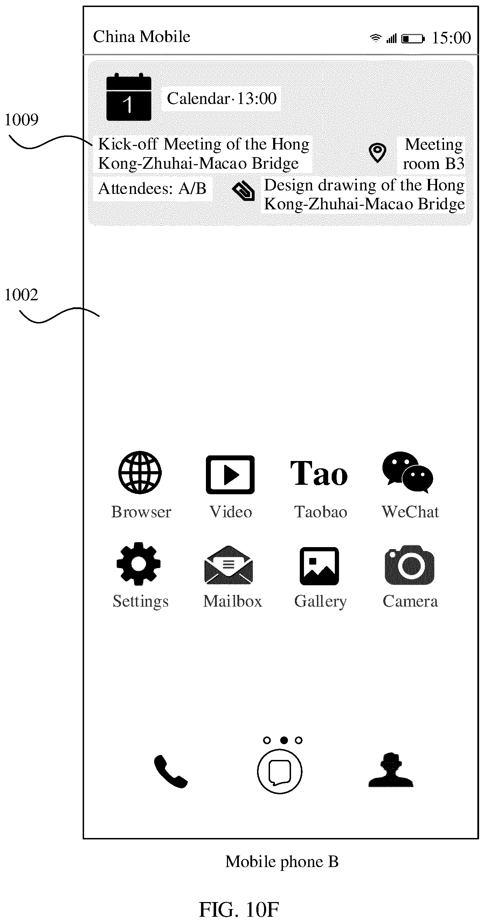

The engineers A and B each can receive a calendar reminder card on their mobile phones when event setting time is approaching. Refer to FIG. 10E. A calendar reminder card 1008 is displayed on the display interface 1001 of the mobile phone of the engineer A. Refer to FIG. 10F. A calendar reminder card 1009 is displayed on the display interface 1002 of the mobile phone of the engineer B. Even if the engineers A and B are not notified of event synchronization and combination, before the meeting starts, both parties can receive information about the other party's attendance, and the event title, location, and attachment that are completely supplemented.

For the combination of the approximate events, a large quantity of repetitive events can be avoided in an event synchronization process, and event information can be mutually supplemented in a combination process.

In some embodiments, for a device supporting distributed storage, only a part of event information that is stored in a distributed manner may be synchronized, and the part of event information may be index information such as a title, time, and a location of an event. For an electronic device with relatively small storage space and a relatively weak display capability, such as a smart speaker, a smartwatch, a smart router, a smart camera, or a game console, synchronization of a part of event information effectively reduces the storage space of the device. Especially for an event carrying an attachment, synchronization of only the title and time of the event but not the attachment can reduce the storage space of the device more obviously. In addition, home devices such as a TV, a router, and a camera are seldom moved in daily life, and are seldom used outdoors. The part of event information is synchronized to an electronic device that is basically used at home, so that the event information is displayed as a backup when a portable device such as a mobile phone or a watch runs out of power.

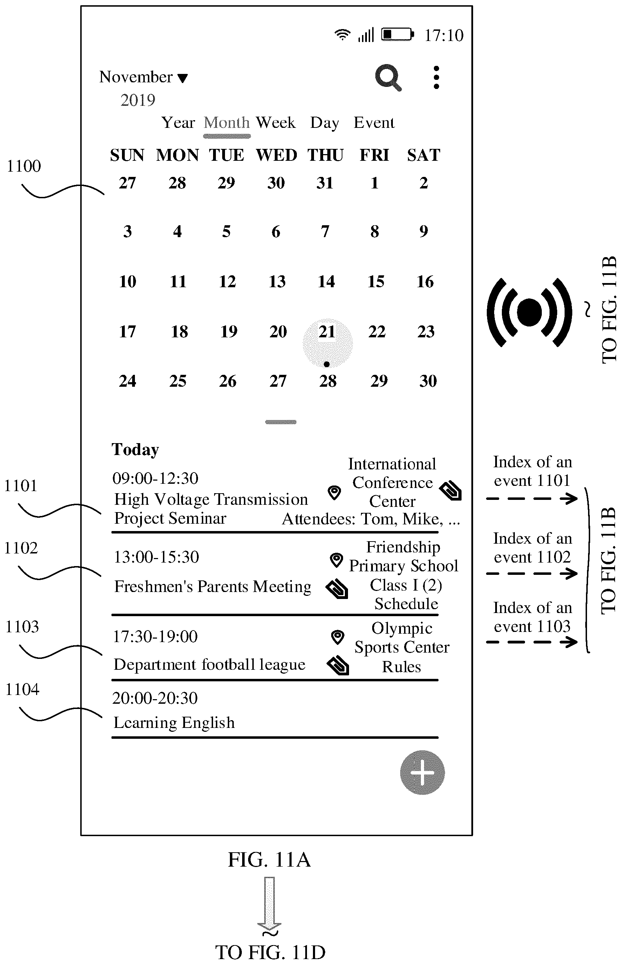

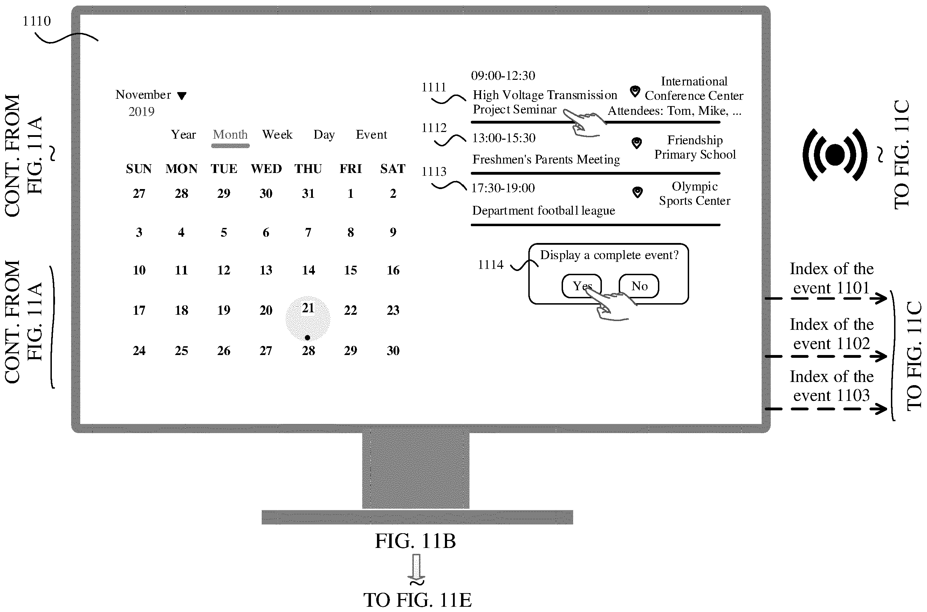

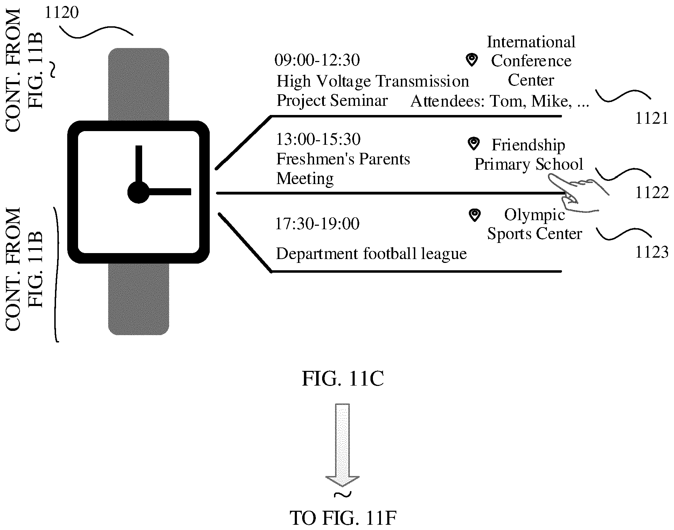

For a device supporting distributed reading, the part of event information synchronized from the device supporting distributed storage is received, and index information of a synchronized event is displayed. When details of the event need to be viewed, the original device supporting distributed storage is searched for all information of the event corresponding to an index. As shown in FIG. 11A, four events 1101 to 1104 today are displayed on a display interface 1100 of a mobile phone, and the mobile phone selects, according to a synchronization policy set by the user, to send indexes of the first three events 1101 to 1103 today to a TV Index information 1111 to 1113 of the events 1101 to 1103 are displayed on a display interface 1110 of the TV Refer to FIG. 11B. After a time period, a smartwatch 1120 accesses a home network, and the TV synchronizes the index information of the events 1101 to 1103 to the smartwatch 1120. Refer to FIG. 11C. Index information 1121 to 1123 of the events 1101 to 1103 are synchronized in the smartwatch 1120.

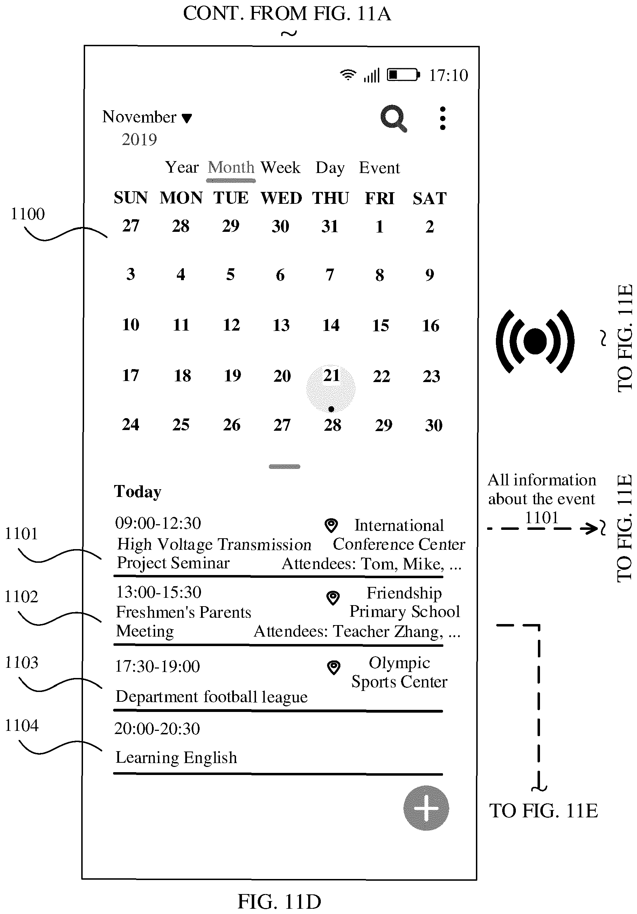

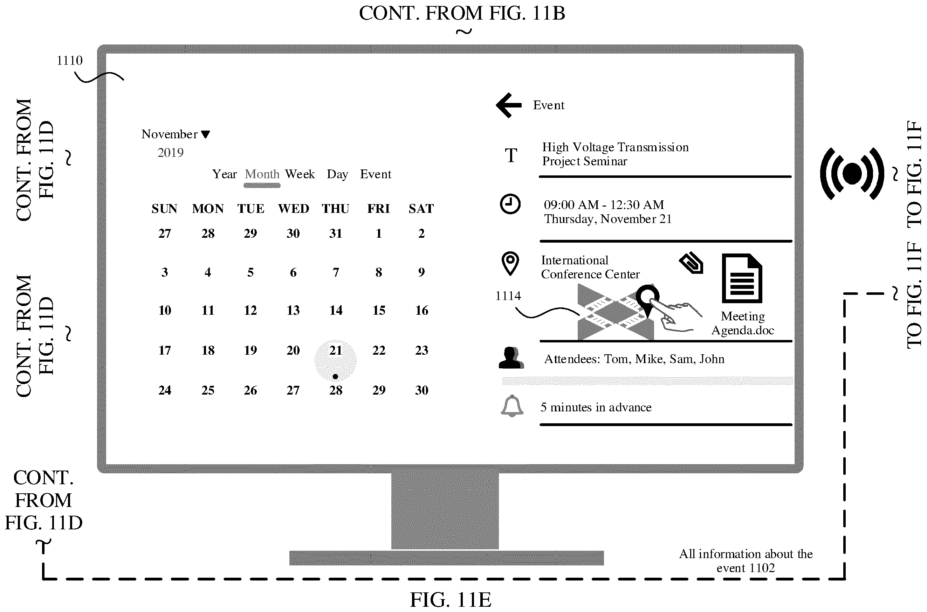

If the user wants to view detailed information of an event by using a TV, for example, to view a specific location, an attachment, and all participants, the user taps index information 1111 of an event 1101 in FIG. 11B. As shown in FIG. 11D, in response to the foregoing operation, all information of the event 1101 stored in the mobile phone is sent to the TV Optionally, in response to tapping the index information 1111 of the event 1101 by the user, a prompt card 1114 is presented on an interface, to prompt the user whether to display a complete event. After the user selects "Yes" and the TV receives an input operation of user, the TV obtains all information of the event 1101 from the mobile phone. As shown in FIG. 11E, all information of the event 1101 is displayed on the display interface 1110 of the TV, including detailed and complete time, location, and attachment content, all participants, reminder time, and the like. The user selects a map 1114 in the location, and can further zoom in on the map for viewing.

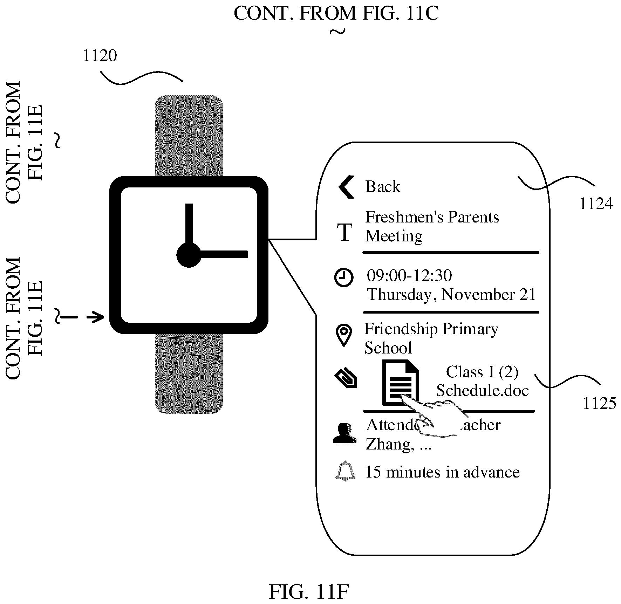

If the user wants to view detailed event information by using the smartwatch, the user taps index information 1122 of an event 1102 in FIG. 11C. As shown in FIG. 11C, in response to the foregoing operation, all information of the event 1102 stored in the mobile phone is sent to the smartwatch 1120. As shown in FIG. 11F, all information 1124 about the event 1102 is displayed on the smartwatch, including detailed and complete time, location, and attachment content, all participants, reminder time, and the like. The user selects an attachment 1125 of the event 1102, to further open the attachment for viewing.

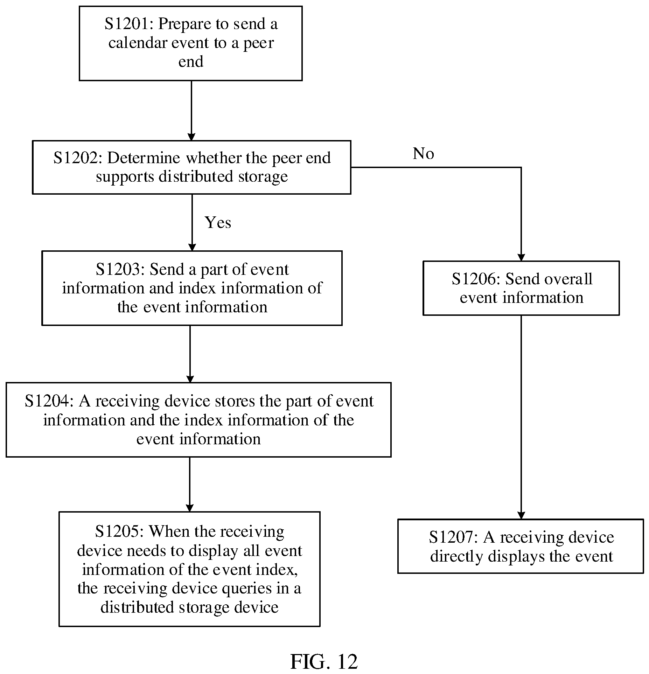

Refer to FIG. 12. The following describes an event synchronization flowchart of a device supporting distributed storage.

S1201: Prepare to send a calendar event to a peer end.

S1202: Determine whether the peer end supports distributed storage. If the peer end supports distributed storage, step S 1203 is performed. If the peer end does not support distributed storage, step S 1206 is performed to send overall event information and send complete information of an event to the peer end, and then step S 1207 is performed to directly display the event on a receiving device.

S1203: Send a part of event information and the index information of the event information. When the peer end supports distributed storage, a part of event and the index information of the event information are sent to the receiving device. The part of event refers to an event file that is selected according to a synchronization policy in the foregoing embodiment and that can be synchronized to the peer end. The index information of the event is not all information of the event, and is only important information such as a title, time, and a location.

S 1204: The receiving device stores the part of event information and the index information of the event information.

S 1205: When the receiving device needs to display all event information of the event index, the receiving device queries in a distributed storage device.

In this embodiment of the present invention, only a part of information (for example, important information such as a title, time, and a location) of the event is synchronized, and the event is stored in a distributed manner, so that storage space can be reduced, and the event can be managed more flexibly.

It can be understood that, to implement the foregoing functions, the electronic device includes a corresponding hardware structure and/or software module for performing each of the functions. A person skilled in the art should easily be aware that, in combination with the examples described in the embodiments disclosed in this specification, algorithm steps may be implemented by hardware or a combination of hardware and computer software in the present invention. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

In the embodiments of the present invention, the electronic device may be divided into functional modules based on the example in the foregoing method. For example, each functional module corresponding to each function may be obtained through division, or two or more functions may be integrated into one processing module. The integrated module may be implemented in a form of hardware, or may be implemented in a form of a software function module. It should be noted that in the embodiments of the present invention, module division is an example, and is merely a logical function division. During actual implementation, another division manner may be used.

An embodiment of the present invention discloses an electronic device, including a processor, and a memory, an input device, and an output device that are connected to the processor. The input device and the output device may be integrated into one device. For example, a touch sensor may be used as an input device, a display may be used as an output device, and the touch sensor and the display may be integrated into a touchscreen.

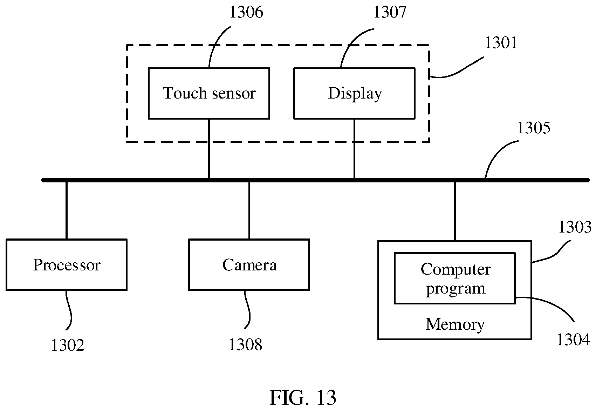

In this case, as shown in FIG. 13, the electronic device may include a touchscreen 1301, one or more processors 1302, one or more cameras 1308, a memory 1303, one or more applications (not shown), and one or more computer programs 1304. The touchscreen 1301 includes a touch sensor 1306 and a display 1307. The foregoing components may be connected by using one or more communication buses 1305. The one or more computer programs 1304 are stored in the memory 1303 and are configured to be executed by the one or more processors 1302. The one or more computer programs 1304 include instructions, and the instructions may be used to perform the steps in the corresponding embodiments. All related content of the steps in the foregoing method embodiments may be cited in function descriptions of corresponding physical components. Details are not described herein again.

For example, the processor 1302 may be specifically the processor 110 shown in FIG. 1, the memory 1303 may be specifically the internal memory 116 and/or the external memory 120 shown in FIG. 1, the camera 1308 may be specifically the camera 193 shown in FIG. 1, the display 1307 may be specifically the display 194 shown in FIG. 1, and the touch sensor 1306 may be specifically the touch sensor 180K in the sensor module 180 shown in FIG. 1. This is not limited in this embodiment of the present invention.

An embodiment of the present invention further provides a computer storage medium. The computer storage medium stores a computer instruction. When the computer instruction is run on an electronic device, the electronic device performs the foregoing related method steps to implement the method in the foregoing embodiment.

An embodiment of the present invention further provides a computer program product. When the computer program product is run on a computer, the computer performs the foregoing related method steps, to implement the method in the foregoing embodiment.

In addition, an embodiment of the present invention further provides an apparatus. The apparatus may be specifically a chip, a component, or a module. The apparatus may include a processor and a memory that are connected. The memory is configured to store a computer-executable instruction. When the apparatus runs, the processor may execute the computer-executable instruction stored in the memory, so that the chip performs a photographing method in the foregoing method embodiments.

The electronic device, the computer storage medium, the computer program product, or the chip provided in embodiments of the present invention is configured to perform the corresponding method provided above. Therefore, for advantageous effects that can be achieved, refer to the advantageous effects in the corresponding method provided above. Details are not described herein again.

Based on descriptions of the foregoing implementations, a person skilled in the art may understand that, for the purpose of convenient and brief descriptions, division into the foregoing functional modules is merely used as an example for description. In actual application, the foregoing functions can be allocated to different functional modules and implemented based on a requirement, that is, an inner structure of an apparatus is divided into different functional modules to implement all or some of the functions described above.

In the several embodiments provided in the present invention, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of the present invention essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of the present invention. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An event information processing method, applied to a first electronic device, wherein the event information processing method comprises:
receiving, by the first electronic device, a first message sent by a second electronic device, wherein the first message carries a trust level of the second electronic device;
determining whether the trust level of the second electronic device meets a preset condition; and
when the trust level of the second electronic device meets the preset condition, sending, by the first electronic device, a first event to the second electronic device.

2. The method according to claim 1, wherein the determining whether the trust level of the second electronic device meets a preset condition, and when the trust level of the second electronic device meets the preset condition, sending, by the first electronic device, a first event to the second electronic device comprises:
determining whether the trust level of the second electronic device is lower than an allowed device trust level corresponding to the first event; and
when the trust level of the second electronic device is not lower than the allowed device trust level corresponding to the first event, sending, by the first electronic device, the first event to the second electronic device.

3. The method according to claim 2, wherein the method further comprises:
when the trust level of the second electronic device is lower than the allowed device trust level corresponding to the first event, determining whether the second electronic device is in a device trustlist corresponding to the first event; and
when the second electronic device is in the device trustlist, sending, by the first electronic device, the first event to the second electronic device.

4. The method according to claim 3, wherein the allowed device trust level and the device trustlist are set by the first electronic device.

5. The method according to claim 1, wherein the method further comprises:
receiving, by the first electronic device, a second event sent by the second electronic device;
determining whether the first electronic device has a third event approximate to the second event;
combining, by the first electronic device, the third event and the second event when the third event is approximate to the second event, to generate a fourth event;
storing, by the first electronic device, the fourth event, and deleting the third event and the second event; and
sending, by the first electronic device, the fourth event to the second electronic device.

6. The method according to claim 5, wherein the determining whether the first electronic device has a third event approximate to the second event comprises:
determining whether a similarity between a title text of the third event and a title text of the second event is greater than a first threshold;
when the similarity between the title text of the third event and the title text of the second event is greater than the first threshold, determining whether a time difference between the third event and the second event is less than a second threshold; and
when the time difference between the third event and the second event is less than the second threshold, determining that the third event is approximate to the second event.

7. The method according to claim 6, wherein the determining whether a similarity between a title text of the third event and a title text of the second event is greater than a first threshold comprises:
when the similarity between the title text of the third event and the title text of the second event is less than or equal to the first threshold, replacing the title text of the third event, and determining whether a similarity between a title text of the third event and the title text of the second event is greater than the first threshold.

8. The method according to claim 6 or 7, wherein after the determining whether a time difference between the third event and the second event is less than a second threshold, the method further comprises:
when the time difference between the third event and the second event is greater than or equal to the second threshold, determining whether a similarity between a location of the third event and a location of the second event is greater than a third threshold; and
when the similarity between the location of the third event and the location of the second event is greater than the third threshold, determining that the third event is approximate to the second event.

9. The method according to claim 8, wherein the determining whether a similarity between a location of the third event and a location of the second event is greater than a third threshold comprises:
when the similarity between the location of the third event and the location of the second event is less than or equal to the third threshold, after replacing a text description of the location of the third event, determining whether a similarity between a location of the third event and the location of the second event is greater than the third threshold.

10. The method according to claim 5, wherein the combining, by the first electronic device, the third event and the second event when the third event is approximate to the second event, to generate a fourth event comprises:
displaying, by the first electronic device, first prompt information, wherein the first prompt information is used to prompt whether to combine approximate events; and
in response to an input operation for the first prompt information, combining, by the first electronic device, the third event and the second event to generate the fourth event.

11. The method according to claim 5 or 10, wherein the fourth event comprises all information in the second event and the third event.

12. The method according to claim 1, wherein the sending, by the first electronic device, a first event to the second electronic device comprises:
sending, by the first electronic device, index information of the first event to the second electronic device.

13. The method according to claim 12, wherein the method further comprises:
when the first electronic device receives a request message sent by the second electronic device, sending, by the first electronic device, all information in the first event to the second electronic device.

14. An electronic device, comprising one or more processors and a memory, wherein the memory stores code, and when the code is executed by the electronic device, the electronic device is enabled to perform the method according to any one of claims 1 to 14.

15. A computer storage medium, comprising computer instructions, wherein when the computer instructions are run on an electronic device, the electronic device is enabled to perform the method according to any one of claims 1 to 14.

16. A computer program product, wherein when the computer program product is run on a computer, the computer is enabled to perform the method according to any one of claims 1 to 14.
